(19) Europäisches Patentamt
European Patent Office
Office européen des brevets

(11) EP 1 290 052 B1

(12) **FASCICULE DE BREVET EUROPEEN**

(45) Date de publication et mention de la délivrance du brevet:
**03.05.2006 Bulletin 2006/18**

(21) Numéro de dépôt: **01940627.1**

(22) Date de dépôt: **29.05.2001**

(51) Int Cl.:
***C08F 293/00*** *(2006.01)* ***C08L 53/00*** *(2006.01)*
***G01N 33/545*** *(2006.01)*

(86) Numéro de dépôt international:
**PCT/FR2001/001663**

(87) Numéro de publication internationale:
**WO 2001/092361 (06.12.2001 Gazette 2001/49)**

(54) **POLYMERE BIOCOMPATIBLE POUR LA FIXATION DE LIGANDS BIOLOGIQUES**
BIOKOMPATIBLE POLYMERE FÜR DIE BINDUNG VON BIOLOGISCHEN LIGANDEN
BIOCOMPATIBLE POLYMER FOR FIXING BIOLOGICAL LIGANDS

(84) Etats contractants désignés:
**AT BE CH CY DE DK ES FI FR GB GR IE IT LI LU MC NL PT SE TR**

(30) Priorité: **29.05.2000 FR 0006861**

(43) Date de publication de la demande:
**12.03.2003 Bulletin 2003/11**

(73) Titulaire: **BIO MERIEUX**
**69280 Marcy l'Etoile (FR)**

(72) Inventeurs:
- **CHARREYRE, Marie-Thérèse**
  **68440 Mornant (FR)**
- **D'AGOSTO, Franck**
  **F-21000 Dijon (FR)**
- **FAVIER, Arnaud**
  **F-01340 Marsonnas (FR)**
- **PICHOT, Christian**
  **F-69960 Corbas (FR)**
- **MANDRAND, Bernard**
  **F-69100 Villeurbanne (FR)**

(74) Mandataire: **Guerre, Dominique et al**
**Cabinet Germain & Maureau,**
**12 rue Boileau**
**69006 Lyon (FR)**

(56) Documents cités:
**EP-A- 0 538 127**
**GB-A- 2 240 547**
**US-A- 5 519 085**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 290 052 B1

## Description

La présente invention concerne un polymère biocompatible permettant la fixation de ligands biologiques, un conjugué polymère-ligand biologique, un dispositif de capture d'une molécule cible comprenant un support solide sur lequel est immobilisé un conjugué polymère-ligand biologique ainsi que les méthodes de préparation du polymère.

Les polymères de synthèse ont été utilisés depuis longtemps aussi bien dans le domaine thérapeutique pour vectoriser des molécules actives ou des gènes que dans le domaine du diagnostic. Dans ce dernier cas, des ligands biologiques sont fixés sur les polymères soit par complexation, par covalence ou par reconnaissance spécifique, et les conjugués ainsi formés sont utilisés dans des tests de détection de molécules cibles essentiellement pour augmenter la sensibilité. Ainsi la demanderesse a déposé un certain nombre de brevets portant sur différents polymères et leurs applications.

Le brevet FR 2 688 788 (Charles M.H. et al.) décrit la synthèse et l'utilisation de conjugués ligands biologiques/copolymère à base d'anhydride maléique comme le copolymère anhydride maléique/méthyl-vinyléther (AMVE) pour la fixation des ligands biologiques sur un support solide. De même, le brevet FR 2 707 010 (Mabilat C. et al) décrit un copolymère à base de N-vinyl pyrrolidone comme le copolymère N-vinyl pyrrolidone/N-acryloxysuccinimide (NVPNAS) toujours pour la fixation de ligands biologiques sur un support solide. Ces mêmes copolymères ont été utilisés pour des réactions d'amplification de signal (voir brevet FR 2 710 075, Mandrand B. et al.) ou pour la synthèse in situ de conjugués (voir WO 99/07749, Minard C. et al).

Bien que ces différents copolymères permettent une amélioration de la sensibilité dans les tests diagnostiques, ils présentent un certain nombre d'inconvénients :

Le copolymère est adsorbé sur le support solide de manière aléatoire. On ne sait pas s'il est adsorbé via un ou des ligands biologiques, ou via des segments du squelette copolymère. De toute façon, le copolymère est adsorbé sur le support solide en plusieurs points répartis le long du squelette (mode boucles). Dans ce cas, la disponibilité des ligands biologiques pour réagir avec les molécules cibles est limitée.

De plus dans certains cas, les conjugués présentent une structure agrégée (voir par exemple Erout M. N. et al., Bioconjugate Chemistry, 7(5) ,568-575, (1996) ou Delair T. et al., Polymers for Advanced Technologies, 9, 349-361, (1998). Ce phénomène d'agrégation est résolu totalement par les méthodes mises en oeuvre dans la demande WO 99/07749, mais la sensibilité des tests de détection des molécules cibles s'en trouve affectée.

Une autre approche a été décrite par Ganachaud F. et al dans « Journal of Applied Polymer Science, 58, 1811-1824, 1995 ». Un homopolymère de N-vinylpyrrolidone est fonctionnalisé à une extrémité par de la biotine, ce qui permet d'envisager la fixation orientée de cet homopolymère sur une surface fonctionnalisée par de la streptavidine.

Cet homopolymère est obtenu par l'utilisation d'un amorceur azoïque porteur de deux fonctions biotine. Cependant, l'utilisation d'un tel amorceur encombré se traduit par: un facteur d'efficacité faible (ce facteur correspond au nombre de chaînes polymères formées à partir de la décomposition d'une molécule d'amorceur : dans ce cas cette valeur est de 0,17 alors que pour les amorceurs classiques la valeur est comprise entre 0,50 et 0,70) ; une vitesse de polymérisation très lente; et une conversion finale du monomère limitée à 20,5 %. De plus, les masses molaires des homopolymères obtenus sont très faibles (6 000 g/mol), ce que les auteurs expliquent par la présence de nombreux protons labiles sur cet amorceur, favorisant les réactions parasites de transfert. Par ailleurs, après la fixation de cet homopolymère sur une surface fonctionnalisée par de la streptavidine, il ne reste aucun site potentiel de fixation des ligands biologiques sur ledit homopolymère. De plus, aucun copolymère ne présentant des sites potentiels de fixation de ligands biologiques n'a été synthétisé par cette approche.

Si un copolymère avait été synthétisé selon l'approche décrite dans le paragraphe précédent, les faibles masses obtenues ne permettraient d'envisager la fixation que de 1 ou 2 ligands biologiques par chaîne de polymère. De plus, ces ligands biologiques se retrouveraient très proches de la surface du support solide et proches entre eux, ce qui nuirait à l'efficacité de réaction de ces ligands avec les molécules cibles.

En outre, le fait de modifier la surface solide par de la streptavidine pour permettre l'accrochage du conjugué polymère-ligands biologiques modifie la nature de la surface de manière non contrôlée en fonction de la structure de la protéine.

Un exemple de polymère de faible masse molaire est donné dans le brevet US 5,519,085 qui concerne la stabilisation de particules solides de type pigment dans des dispersions aqueuses et qui utilise des polymères triblocs.

La masse molaire de ces polymères est inférieure à 20.000 g/mole et se situe en fait dans la gamme de 1000 à 7000 g/mole ce qui ne permet pas de réaliser un greffage élevé de molécules biologiques.

La présente invention résout les problèmes mentionnés ci-dessus en proposant un nouveau type de polymère pour la fixation de ligands biologiques qui présente :

- une architecture contrôlée pour éloigner les molécules biologiques du support solide et favoriser la réactivité de ces ligands biologiques avec des molécules cibles en solution,
- une taille suffisante pour permettre un taux de greffage élevé des ligands biologiques tout en conservant un espacement entre lesdits ligands et donc favoriser la sensibilité des tests diagnostiques.

Les méthodes de préparation de ces polymères par des techniques de polymérisation contrôlée permettent de connaître à priori les masses molaires des chaînes et de les obtenir avec des indices de polydispersité faibles, c'est-à-dire des chaînes très homogènes en taille.

A cette fin, la présente invention décrit un polymère biocompatible d'une masse molaire supérieure à 50.000 g/mole, préférentiellement 90.000 g/mole, permettant la fixation de ligands biologiques, et comprenant au moins : un premier segment linéaire consistant en un homopolymère hydrophobe résultant de la polymérisation d'un monomère A hydrophobe; un deuxième segment linéaire consistant en un copolymère hydrophile résultant de la copolymérisation d'un monomère B portant une fonction réactive X et d'un monomère C hydrophile et ne portant pas de fonction réactive, ledit deuxième segment étant lié à une extrémité du premier segment de manière covalente et l'ensemble des deux segments constituant le squelette du polymère.

Par polymère biocompatible, on entend un polymère qui ne perturbe pas les propriétés biologiques des ligands biologiques fixés sur le polymère en terme de reconnaissance moléculaire.

Par ligand biologique on entend un composé qui possède au moins un site de reconnaissance lui permettant de réagir avec une molécule cible d'intérêt biologique. A titre d'exemple, on peut citer comme ligands biologiques les polynucléotides, les antigènes, les anticorps, les polypeptides, les protéines, les haptènes.

Le terme « polynucléotide » signifie un enchaînement d'au moins 2 désoxyribonucléotides ou ribonucléotides comprenant éventuellement au moins un nucléotide modifié, par exemple au moins un nucléotide comportant une base modifiée tel que l'inosine, la méthyl-5-désoxycytidine, la diméthylamino-5-désoxyuridine, la désoxyuridine, la diamino-2,6-purine, la bromo-5-désoxyuridine ou toute autre base modifiée permettant l'hybridation. Ce polynucléotide peut aussi être modifié au niveau de la liaison internucléotidique comme par exemple les phosphorothioates, les H-phosphonates, les alkyl-phosphonates, au niveau du squelette comme par exemple les alpha-oligonucléotides (FR 2 607 507) ou les PNA (M. Egholm et al., J. Am. Chem. Soc., 114, 1895-1897, (1992) ou les 2' O-alkyl ribose. Chacune de ces modifications peut être prise en combinaison. Le polynucléotide peut être un oligonucléotide, un acide nucléique naturel ou son fragment comme un ADN, un ARN ribosomique, un ARN messager, un ARN de transfert, un acide nucléique obtenu par une technique d'amplification enzymatique.

Par « polypeptide » on entend un enchaînement d'au moins deux acides aminés.

Par acides aminés, on entend les acides aminés primaires qui codent pour les protéines, les acides aminés dérivés après action enzymatique comme la trans-4-hydroxyproline et les acides aminés naturels mais non présents dans les protéines comme la norvaline, la N-methyl-L leucine, la staline (voir Hunt S. dans Chemistry and Biochemistry of the amino acids, Barett G.C., ed., Chapman and Hall, London, 1985), les acides aminés protégés par des fonctions chimiques utilisables en synthèse sur support solide ou en phase liquide et les acides aminés non naturels.

Le terme "haptène" désigne des composés non immunogènes, c'est-à-dire incapables par eux mêmes de promouvoir une réaction immunitaire par production d'anticorps, mais capables d'être reconnues par des anticorps obtenus par immunisation d'animaux dans des conditions connues, en particulier par immunisation avec un conjugué haptène-protéine. Ces composés ont généralement une masse moléculaire inférieure à 3000 Da, et le plus souvent inférieure à 2000 Da et peuvent être par exemple des peptides glycosylés, des métabolites, des vitamines, des hormones, des prostaglandines, des toxines ou divers médicaments, les nucléosides et nucléotides.

Le terme "anticorps" inclut les anticorps polyclonaux ou monoclonaux, les anticorps obtenus par recombinaison génétique, et des fragments d'anticorps tels que des fragments Fab ou $F(ab')_2$. Le terme " antigène " désigne un composé susceptible de générer des anticorps. Le terme "protéine" inclut les holoprotéines et les hétéroprotéines comme les nucléoprotéines, les lipoprotéines, les phosphoprotéines, les métalloprotéines et les glycoprotéines aussi bien fibreuses que globulaires sous leur forme conformationnelle caractéristique.

La technique de référence de mesure de la masse molaire d'un polymère, qui est exprimée dans la présente invention par le $M_{pic}$ (masse molaire de la population majoritaire des chaînes polymères en g/mole) est la chromatographie d'exclusion stérique couplée à un détecteur de diffusion de la lumière (C.E.S/D.D.L). En déterminant par mesure la valeur de l'incrément d'indice de réfraction (dn/dc) du polymère considéré dans un solvant approprié, solvant qui sera utilisé comme éluant de la C.E.S, le détecteur D.D.L. donne des valeurs de masses molaires dites absolues par opposition aux valeurs de masses molaires dites relatives à un étalonnage (standards polystyrène en phase organique par exemple), lorsqu'on utilise une technique C.E.S. conventionnelle.

Le squelette du polymère est constitué de deux segments linéaires c'est à dire que chaque monomère, à l'exception des extrémités, est lié à deux autres monomères encadrant ledit monomère le long de la chaîne.

Le premier segment est un homopolymère hydrophobe c'est à dire comprenant un enchaînement d'un seul monomère A hydrophobe.

Le deuxième segment linéaire est un copolymère constitué de deux monomères, le premier monomère C apportant de l'hydrophilie, afin de favoriser un déploiement maximal du deuxième segment dans la phase aqueuse, et l'autre monomère B apportant une fonction réactive X afin de réaliser, soit l'ancrage covalent de segments latéraux,

lesdits segments latéraux présentant chacun plusieurs sites potentiels de fixation de ligands biologiques, ou soit directement la fixation de ligands biologiques. Un autre rôle du monomère hydrophile est de permettre l'espacement des sites d'ancrage des chaînons latéraux ou des molécules biologiques.

Le terme copolymère doit être compris comme un polymère formé par deux monomères B et C différents et notamment les copolymères statistiques (dans lesquels les motifs monomères B et C sont répartis statistiquement le long de la chaîne macromoléculaire) et les copolymères alternés (dans lesquels les monomères B et C se succèdent régulièrement selon une structure générale $(BC)_n$ dans laquelle n est un nombre entier). Ces différents copolymères peuvent être obtenus par réaction de polycondensation, ou par polymérisation en chaîne par voie radicalaire, ionique, ou par transfert de groupe, avantageusement par polymérisation radicalaire vivante comme la polymérisation par terminaison réversible (utilisation de radicaux nitroxydes), la polymérisation par transfert d'atome (ATRP), et de préférence la polymérisation par transfert réversible de chaîne par addition-fragmentation, appelée RAFT (voir WO 98/01478). Ces différentes techniques de polymérisation sont décrites par exemple dans K. Matyjazewski, Controlled Radical Polymerization, American Chemical Society Series, Washington DC, USA, 1997 ; G. Odian, Principles of Polymerization, Third edition, Wiley-Interscience Publication, 1991.

De préférence le deuxième segment est un copolymère statistique.

Le monomère A est un monomère hydrophobe choisi parmi :

- les monomères de type éthylène, propylène, vinyl aromatique, acrylate, méthacrylate, dérivé substitué de l'acrylamide ou de méthacrylamide, styrène ou dérivé substitué du styrène, halogénure de vinyle (chlorure de vinyle), acétate de vinyle, diène ou des monomères présentant des fonctions nitriles (acrylonitrile).

Par hydrophobe, on entend un monomère dont le polymère présente en phase aqueuse une structure de pelote compacte, correspondant à un coefficient de Mark-Houwink-Sakurada (facteur de forme) inférieur à 0,8. De préférence le monomère A est choisi parmi les dérivés méthacrylates, les dérivés acrylates, les dérivés du styrène, avantageusement le n-butyl acrylate, le t-butyl acrylate, et le styrène.

Le monomère B est un monomère fonctionnel c'est à dire porteur d'une fonction réactive X, choisi parmi les monomères fonctionnels de type acrylate, méthacrylate, styrènique, acrylamide et méthacrylamide tels que les dérivés substitués d'acrylamide et de méthacrylamide, en particulier les dérivés saccharidiques polymérisables. Avantageusement, B est le N-acryloxy succinimide, le N-méthacryloxy succinimide, le 2-hydroxyéthyl méthacrylate, le 2-aminoéthyl méthacrylate, le 2-hydroxyéthyl acrylate, le 2-aminoéthyl acrylate, le 1,2:3,4-di-*O*-isopropylidene-6-*O*-acryloyl-D-galactopyranose, de préférence B est le N-acryloxy succinimide, le 2-aminoéthyl acrylate, le 1,2:3,4-di-*O*-isopropylidene-6-*O*-acryloyl-D-galactopyranose.

La fonction réactive X est choisie à titre d'exemple parmi les groupements amine, hydrazine, hydrazone, azide, isocyanate, isothiocyanate, alcoxyamine, aldéhyde, époxy, nitrile, maléimide, halogénoalkyle, hydroxyle, thiol, acide carboxylique activé sous forme d'ester de N-hydroxysuccinimide, de pentachlorophényle, de trichlorophényle, de p-nitrophényle, de carboxyphényle. De préférence, la fonction réactive X est choisie parmi les fonctions amine, aldéhyde ou acide carboxylique activé sous forme d'ester de N-hydroxysuccinimide.

Le monomère C est un monomère hydrophile ne portant pas de fonction réactive. Par hydrophile, on entend un monomère dont le polymère présente en phase aqueuse une structure déployée, correspondant à un coefficient de Mark-Houwink-Sakurada supérieur à 0,8. Le monomère C est choisi parmi les monomères dérivés d'acrylamide, de méthacrylamide, la N-vinylpyrrolidone. De préférence le monomère C est la N-vinylpyrrolidone (NVP), la N-acryloyl morpholine (NAM).

Dans la présente invention, le premier segment a une masse molaire comprise entre 10.000 et 250.000 g/mol pour permettre l'immobilisation sur support solide du polymère biocompatible de l'invention ou du conjugué polymère-ligand biologique toujours selon l'invention. Le deuxième segment a une masse molaire supérieure à 40.000 g/mole et de préférence supérieure à 80.000 g/mole pour pouvoir disposer de suffisamment de fonctions réactives X permettant la fixation des ligands biologiques ou des segments latéraux.

De préférence, le deuxième segment est un copolymère statistique dont la composition exprimée par le rapport des quantités de monomères en mole, quantité de monomère C sur quantité de monomère B est comprise entre 1 et 10, préférentiellement entre 1,5 et 4 pour permettre une espacement des fonctions réactives et ainsi diminuer l'encombrement stérique qui pourrait résulter du couplage des ligands biologiques ou des segments latéraux.

Dans un autre mode de réalisation de l'invention, le polymère comprend, en outre, au moins un segment dit latéral, ledit segment latéral consistant en un homopolymère linéaire résultant de la polymérisation d'un monomère D portant une fonction réactive Y (éventuellement protégée) afin de réaliser la fixation par couplage covalent de ligands biologiques, et ledit segment latéral étant lié de manière covalente au deuxième segment du squelette en un seul point de liaison par l'intermédiaire d'une de ses fonctions réactives X. Avantageusement au moins 10 segments latéraux, plus avantageusement au moins 30 segments latéraux, de préférence au moins 70 segments latéraux, sont présents sur le squelette du polymère. Quand le polymère comprend au moins un segment latéral, le polymère est dit ramifié. Le

segment latéral est lié par une liaison covalente au squelette du polymère en un seul point de liaison.

Dans un mode particulier, la liaison consiste en une liaison covalente entre une fonction réactive quelconque Y du monomère D du segment latéral et une fonction réactive X d'un monomère B du squelette.

Dans un autre mode particulier préférentiel, pour conserver une architecture contrôlée au polymère (c'est à dire pour que les segments latéraux soient fixés de manière orientée sur le squelette, formant un espace cylindrique autour du squelette), la liaison covalente a lieu entre une fonction réactive différente de Y présente à l'extrémité du segment latéral et une fonction réactive X d'un monomère B du squelette. A cette fin, une technique de polymérisation contrôlée comme la polymérisation anionique vivante ou de préférence la polymérisation cationique vivante ou comme la polymérisation radicalaire vivante, de préférence la technique RAFT est utilisée pour synthétiser le segment latéral. Ceci permet sa fonctionnalisation à une extrémité par une fonction réactive qui est susceptible de réagir (complémentaire) avec la fonction X du monomère B. Entre cette fonction réactive terminale et le premier motif de l'homopolymère se trouve, en particulier, un bras espaceur de type $-(CH_2)_n-$avec n nombre entier supérieur ou égal à 1, afin de diminuer l'encombrement de l'extrémité du segment latéral et de favoriser la réaction de cette extrémité sur une fonction X du squelette. Cela permet aussi d'éloigner du squelette les fonctions réactives Y du segment latéral.

Le monomère D est choisi parmi les monomères fonctionnels de type acrylate, méthacrylate, acrylamide, méthacrylamide, éther vinylique comme le chloro éthyl vinyl éther (CEVE), les dérivés polymérisables d'un sucre comme le glucose ou le galactose, avantageusement parmi les dérivés polymérisables du galactose.

En particulier le monomère D, s'il est dérivé d'un sucre, peut comporter un bras espaceur de type $(CH_2)_nO$-, avec n nombre entier supérieur ou égal à 1, entre le sucre et la fonction polymérisable du monomère D pour éloigner le cycle saccharidique de la chaîne du segment latéral et améliorer l'accessibilité de la fonction réactive Y vis à vis des ligands biologiques. De préférence la fonction polymérisable éventuellement portée par le bras espaceur est introduite en position 6 du cycle saccharidique pour les mêmes raisons. Les fonctions OH secondaires en position 1, 2, 3 et 4 du cycle saccharidique sont protégées sous forme d'acétate ou de benzoate, avantageusement sous forme d'acétal de type cyclohexylidène ou de préférence de type isopropylidène (et sont déprotégées après polymérisation du monomère D afin de réaliser le couplage covalent des ligands biologiques).

En particulier, le monomère D est le N-acryloxy succinimide, le N-méthacryloxy succinimide, le 1,2:3,4-di-*O*-isopropylidene-6-*O*-acryloyl-D-galactopyranose. De préférence, le monomère D est le 1,2:3,4-di-*O*-isopropylidene-6-*O*-(2-vinyloxyethyl)-D-galactopyranose.

De préférence, le segment latéral a une masse molaire supérieure à 1500 g/mole.

La fonction réactive Y est choisie à titre d'exemple parmi les groupements amine, hydrazine, hydrazone, azide, aldéhyde (en particulier aldéhyde masqué en position anomérique d'un cycle saccharidique), thiol, acide carboxylique activé comme par un N-hydroxysuccinimide, nitrile, halogénoalkyle, hydroxyle, maléimide, époxy, alcoxyamine.

En fonction des contraintes de polymérisation et de construction de l'architecture du polymère, les fonctions réactives sont protégées ou non sur les monomères B et/ou D. Dans le cas où le monomère B est le N-acryloxy succinimide, ce monomère polymérise sans nécessiter la protection de la fonction réactive. Dans le cas où le monomère D est dérivé d'un sucre, il est nécessairement protégé comme ceci est expliqué dans les exemples.

Les groupements protecteurs de type isopropylidène sont enlevés en milieu acide ce qui libère les fonctions hydroxyles du cycle saccharidique, conférant un caractère hydrophile au segment latéral. Cela permet aussi l'établissement de l'équilibre entre la forme cyclique et la forme acyclique du sucre, cette dernière forme faisant apparaître une fonction aldéhyde sur la position anomérique du sucre.

Dans un premier mode de réalisation de l'invention, la fonction réactive Y est différente de la fonction réactive X. Différents modes préférentiels sont indiqués ci-dessous :

X est une fonction carboxylique activée par un N-hydroxysuccinimide (par exemple si B est le N-acryloxy succinimide) et Y est une fonction aldéhyde protégée (par exemple si D est le 1,2:3,4-di-*O*-isopropylidene-6-*O*-(2-vinyloxy ethyl)-D-galactopyranose), et dans ce cas le segment latéral est fonctionnalisé en extrémité avec une fonction amine, hydrazine ou alcoxyamine comme cela est bien décrit dans les exemples. La fonction résultante de l'ancrage du segment latéral sur le squelette est une fonction de type peptidique ou hydrazinopeptidique, très stable.

X est une fonction carboxylique activée par un N-hydroxysuccinimide (par exemple si B est le N-acryloxy succinimide) et Y est une fonction halogénoalkyle (par exemple si D est le chloro éthyl vinyl éther), et dans ce cas le segment latéral est fonctionnalisé en extrémité avec une fonction amine, hydrazine ou alcoxyamine. La fonction résultante de l'ancrage du segment latéral sur le squelette est une fonction de type peptidique ou hydrazinopeptidique, très stable.

X est une fonction amine (par exemple si B est le 2-amino éthyl acrylate) et Y est une fonction halogénoalkyle (par exemple si D est le chloro éthyl vinyl éther), et dans ce cas le segment latéral est fonctionnalisé en extrémité avec une fonction aldéhyde. La fonction résultante de l'ancrage du segment latéral sur le squelette est une fonction de type imine stabilisée par réduction en amine secondaire (par exemple par l'utilisation de $NaBH_4$).

X est une fonction amine (par exemple si B est le 2-amino éthyl acrylate) et Y est une fonction aldéhyde protégée (par exemple si D est le 1,2:3,4-di-*O*-isopropylidene-6-*O*-(2-vinyloxy ethyl)-D-galactopyranose), et dans ce cas le segment latéral est fonctionnalisé en extrémité avec une fonction aldéhyde. La fonction résultante de l'ancrage du segment

latéral sur le squelette est une fonction de type imine stabilisée par réduction en amine secondaire (par exemple par l'utilisation de $NaBH_4$).

X est une fonction amine (par exemple si B est le 2-amino éthyl acrylate) et Y est une fonction aldéhyde protégée (par exemple si D est le 1,2:3,4-di-*O*-isopropylidene-6-*O*-acryloyl-D-galactopyranose) et dans ce cas le segment latéral est fonctionnalisé en extrémité par une fonction carboxylique (introduite lors de la synthèse dudit segment latéral par la technique RAFT). La fonction carboxylique terminale est activée (par exemple par utilisation de dicyclohexyl carbodiimide, DCC) afin de fixer de manière covalente ledit segment latéral sur une des fonctions X du squelette. La fonction résultante de l'ancrage du segment latéral sur le squelette est une fonction de type peptidique très stable.

De préférence encore X est une fonction aminé (par exemple si B est le 2-amino éthyl acrylate) et Y est une fonction carboxylique activée par un N-hydroxysuccinimide (par exemple si D est le N-acryloxy succinimide), et dans ce cas le segment latéral est fonctionnalisé en extrémité par une fonction carboxylique (introduite lors de la synthèse du segment latéral par la technique RAFT). Dans ce cas, il est nécessaire de réaliser d'abord le couplage covalent des ligands biologiques sur les fonctions Y du segment latéral. Après avoir bloqué les fonctions résiduelles Y (par exemple par de l'amino éthyl morpholine), la fonction carboxylique terminale du segment latéral est activée (par exemple par utilisation de dicyclohexyl carbodiimide, DCC) afin de lier de manière covalente ledit segment latéral sur une des fonctions X du squelette. La fonction résultante de l'ancrage du segment latéral sur le squelette est une fonction de type peptidique très stable.

Dans un deuxième mode de réalisation de l'invention, la fonction réactive Y est identique à la fonction réactive X.

Dans ce cas, il est préférable que les fonctions réactives X et Y soient des fonctions protégées et déprotégeables dans des conditions prédéterminées. En particulier, il faut éviter des réactions conduisant à des phénomènes de réticulation intra segment qui nuiraient à la structure orientée en trois dimensions du polymère ramifié selon l'invention. De préférence X et Y sont des fonctions carboxyliques activées par un N-hydroxysuccinimide (par exemple si B et D sont le N-acryloxy succinimide) et dans ce cas le segment latéral est fonctionnalisé en extrémité par une fonction thiol (introduite lors de la synthèse du segment latéral par la technique RAFT). Dans ce cas, il est nécessaire de réaliser d'abord le couplage covalent des ligands biologiques sur les fonctions Y du segment latéral. Après avoir bloqué les fonctions résiduelles Y (par exemple par de l'amino éthyl morpholine), la fonction thiol terminale du segment latéral est transformée en fonction amine (par exemple par utilisation de N-iodoéthyl trifluoro acétamide) afin de fixer de manière covalente ledit segment latéral sur une des fonctions X du squelette. La fonction résultante de l'ancrage du segment latéral sur le squelette est une fonction de type peptidique très stable.

De préférence X et Y sont des fonctions de type aldéhyde protégé (par exemple si B est le 1,2:3,4-di-*O*-isopropylidene-6-*O*-acryloyl-D-galactopyranose et si D est le 1,2:3,4-di-*O*-isopropylidene-6-*O*-(2-vinyloxy ethyl)-D-galactopyranose), et dans ce cas, le segment latéral est fonctionnalisé en extrémité par une fonction amine ou hydrazine. Dans ce cas, il est nécessaire de déprotéger d'abord les sucres du squelette afin de fixer de manière covalente le segment latéral sur une des fonctions X déprotégées du squelette. La fonction résultante de l'ancrage du segment latéral sur le squelette est une fonction de type imine stabilisée par réduction en amine secondaire (par exemple par l'utilisation de $NaBH_4$). Après avoir bloqué les fonctions résiduelles X sur le squelette (par exemple par de l'éthanolamine ou de préférence par de l'amino éthyl morpholine), les sucres des segments latéraux sont à leur tour déprotégés afin de réaliser le couplage covalent des ligands biologiques.

Dans un autre mode particulier de réalisation de l'invention, le squelette polymère comprend en outre un segment dit d'éloignement intercalé entre le premier segment et le deuxième segment, consistant en un homopolymère linéaire résultant de la polymérisation d'un monomère E hydrophile, ledit monomère ne portant pas de fonction réactive.

Le monomère E est choisi parmi les dérivés d'acrylamide, de méthacrylamide, la N-vinylpyrrolidone. De préférence le monomère E est la N-acryloyl morpholine (NAM).

Le monomère E peut être identique ou différent du monomère C, de préférence identique car la réaction de polymérisation est plus simple.

Le segment d'éloignement a une masse molaire supérieure à 5.000 g/mole, de préférence 10.000 g/mole.

Le segment d'éloignement est obtenu par polymérisation radicalaire vivante du monomère E, comme la polymérisation par terminaison réversible (utilisation de radicaux nitroxydes), la polymérisation par transfert d'atome (ATRP), et de préférence la polymérisation par transfert réversible de chaîne par addition-fragmentation (RAFT).

Ce segment d'éloignement est synthétisé consécutivement au premier segment ou au deuxième segment, selon la nature des monomères et selon la technique de polymérisation retenue.

La présente invention concerne également un conjugué comprenant au moins un ligand biologique fixé sur un polymère.

Dans le cas où le polymère selon l'invention ne comporte pas de segments latéraux, les ligands biologiques sont fixés directement ou indirectement sur le polymère par l'intermédiaire des fonctions réactives X du monomère B.

Dans le cas où le polymère selon l'invention comporte au moins un segment latéral, les ligands biologiques sont fixés directement ou indirectement sur les segments latéraux. Dans un premier mode Je fixation, les ligands biologiques sont fixés dans une première étape sur le segment latéral par l'intermédiaire des fonctions Y et l'ensemble

segment latéral-ligands biologiques est ensuite fixé sur le squelette du polymère comportant ou non un segment d'éloignement. Dans un deuxième mode de fixation, préférentiel, les ligands biologiques sont fixés, toujours par l'intermédiaire des fonctions Y, sur les segments latéraux, lesdits segments latéraux ayant été préalablement fixés par leur extrémité réactive sur les fonctions réactives X du squelette polymère.

Par fixation indirecte on entend une fixation par une interaction non covalente.

Pour une interaction non covalente, on peut utiliser tous moyens connus fondés par exemple sur les phénomènes d'affinité, notamment entre molécules biologiques comme l'interaction biotine/streptavidine. Par exemple, la biotine est introduite sur le polymère par couplage covalent sur les fonctions réactives X et la fixation du ligand biologique sur le polymère est assurée par la présence de la streptavidine introduite par couplage sur le ligand biologique. Dans un autre exemple, la streptavidine est introduite sur le polymère par couplage covalent sur les fonctions réactives X et la fixation du ligand biologique sur le polymère est assurée par la présence de la biotine introduite par couplage sur le ligand biologique.

Par fixation directe on entend une fixation par couplage covalent. De nombreuses méthodes pour introduire des fonctions réactives sur un ligand biologique sont disponibles : pour les protéines, antigènes, anticorps ou polypeptides, voir par exemple "Chemistry of protein conjugation and cross-linking", Wong S. S., CRC press, Boca Raton, 1991 ou "Bioconjugate techniques", Hermanson G.T., Academic Press, San Diego, 1996. Pour les acides nucléiques, on synthétise par exemple un polynucléotide par méthode chimique sur support solide ayant une fonction réactive à un endroit quelconque de la chaîne comme par exemple, l'extrémité 5' ou l'extrémité 3' ou sur une base ou sur un phosphate intemucléotidique ou sur la position 2' du sucre (voir « Protocols for Oligonucleotides and Analogs, Synthesis and Properties » édité par S. Agrawal, Humana Press, Totowa, New Jersey). Des méthodes d'introduction de fonctions réactives sur des haptènes sont données notamment dans "Preparation of antigenic steroid-protein conjugate", F Kohen et al., dans Steroid immunoassay, Proceedings of the fifth tenovus workshop, Cardiff, Avril 1974, ed. EHD Cameron, SH. Hillier, K. Griffiths, comme par exemple l'introduction d'une fonction hémisuccinate en position 6, 11, 20 ou 21, d'une fonction chloroformiate en position 11 ou d'une fonction carboxyméthyle en position 6, dans le cas de la progestérone. Il n'est pas forcément nécessaire d'introduire spécifiquement une fonction réactive sur le ligand. Par exemple, dans le cas d'un ligand biologique de type protéine possédant une composition en lysine suffisante, les amines portées par la chaîne latérale de la lysine peuvent être utilisées pour le couplage.

Le ligand biologique est couplé au polymère par formation d'une liaison covalente entre les deux fonctions réactives complémentaires, l'une portée par le ligand biologique et l'autre par le polymère. Par exemple, on peut coupler une fonction amine primaire sur un acide carboxylique activé comme par le N-hydroxy succinimide ou sur un aldéhyde, une fonction alcoxyamine avec une cétone ou un aldéhyde, une fonction hydrazine avec un aldéhyde, ou bien une fonction thiol avec un halogénoalkyle ou un maléimide. Dans le cas d'un couplage entre une amine et un aldéhyde, il est préférable de réduire l'imine formée, soit simultanément par l'action de $NaBH_3CN$, soit dans une étape ultérieure par action de $NaBH_4$ ou $NaBH_3CN$.

Un autre objet de la présente invention est un dispositif de capture d'une molécule cible dans le but de la détecter et/ou la doser et/ou la purifier, comprenant un support solide sur lequel est immobilisé un conjugué polymère-ligand biologique.

Le terme "support solide" tel qu'utilisé ici inclut tous les matériaux sur lesquels peut être immobilisé le conjugué pour une utilisation dans des tests diagnostiques, en chromatographie d'affinité et dans des processus de séparation. Des matériaux naturels, de synthèse, modifiés ou non chimiquement, peuvent être utilisés comme support solide, notamment des polymères tels que polychlorure de vinyle, polyéthylène, polystyrènes, polyacrylate, polyamide, ou copolymères à base de monomères vinyl aromatiques, alkylesters d'acides alpha-béta insaturés, esters d'acides carboxyliques insaturés , chlorure de vinylidène , diènes ou composés présentant des fonctions nitrile (acrylonitrile) ; des polymères de chlorure de vinyle et de propylène, polymère de chlorure de vinyle et acétate de vinyle ; copolymères à base de styrènes ou dérivés substitués du styrène; des fibres synthétiques telles que le nylon; des matériaux inorganiques tels que la silice, le verre, la céramique, le quartz; des latex, des particules magnétiques; des dérivés métalliques. Le support solide selon l'invention peut être, sans limitation, sous la forme d'une plaque de microtitration, d'une feuille, d'un cône, d'un tube, d'un puits, de billes, particules ou analogues, support plan comme un wafer de silice ou silicium. Le matériau est soit hydrophile, soit hydrophobe intrinsèquement ou par suite d'une modification chimique comme par exemple un support hydrophile rendu hydrophobe.

Par exemple, la surface d'un wafer de silice est rendue hydrophobe par silanisation, en utilisant un alkylsilane comme le n-octadécyl méthyl dichlorosilane, le n-octadécyl diméthyl chlorosilane ou le n-octadécyl trichlorosilane.

Dans un mode de réalisation, le conjugué polymère-ligand biologique est immobilisé sur le support solide par liaison covalente.

Par exemple, si A est le t-butyl acrylate, le squelette est immobilisé sur un wafer de silice silanisé par un amino silane, par réaction de transamidation entre les fonctions ester de t-butyl du premier segment du squelette et les fonctions amine en surface du support, ou par réaction d'hydrolyse des fonctions ester de t-butyl dudit premier segment suivie d'une activation des fonctions carboxyliques résultantes (utilisation de dicyclohexyl carbodiimide), afin de réaliser une

liaison covalente de type peptidique avec les fonctions amines en surface du support.

Dans un mode de réalisation préféré selon l'invention, le conjugué polymère-ligand biologique est immobilisé sur le support solide par adsorption en utilisant une interaction de type hydrophobe-hydrophobe entre le premier segment du polymère et la surface du support qui est dans ce cas hydrophobe.

Pour permettre la détection et/ou la quantification et/ou la purification de la molécule cible, le ligand biologique est capable de former un complexe de capture ligand/anti-ligand. En particulier, ledit anti-ligand constitue la molécule cible. En fonction de la nature de la cible à détecter, l'homme du métier choisira la nature du ligand biologique à fixer sur le polymère. A titre d'exemple, pour la mise en évidence d'une molécule cible de type acide nucléique, le ligand biologique peut être un acide nucléique suffisamment complémentaire de la cible pour s'hybrider spécifiquement en fonction des conditions de réaction et notamment la température ou la salinité du milieu réactionnel.

Une étape de détection de la molécule cible peut être nécessaire comme dans le cas d'une hybridation sandwich (voir par exemple WO 91/19862) ou bien la molécule cible peut être directement marquée comme après une technique d'amplification enzymatique de type PCR (polymerase chain reaction) qui incorpore un nucléotide fluorescent. (voir DNA probes, 2nd edition, Keller G.H. et Manak M., Stockton Press, 1993).

Lors des différentes étapes de couplage covalent décrit précédemment, il est souhaitable de bloquer les fonctions réactives X ou Y qui n'ont pas réagi, par l'action d'une molécule chimique de petite taille. Par exemple, lors de la fixation de ligands biologiques portant une fonction amine sur un polymère ne comportant aucun segment latéral et comprenant un dérivé NAS comme monomère B, les fonctions esters activés résiduelles du squelette sont bloquées par réaction d'une molécule de type aminoalcane comme l'éthyl amine, la propyl amine, la butyl aminé, l'hexyl amine, ou de type aminoalcool comme l'éthanolamine, le 3-amino-1-propanol, le 4-amino-1-butanol le 5-amino-1-pentanol, le 6-amino-1-hexanol, ou de préférence l'aminoéthyl morpholine. La même molécule est utilisée pour bloquer les fonctions aldéhydes résiduelles du monomère D du segment latéral après la fixation de ligands biologiques sur ledit segment latéral. Un autre avantage de l'amino éthyl morpholine est d'apporter un surcroît d'hydrophilie au conjugué.

Dans un autre exemple, lors de la fixation de ligands biologiques sur un polymère ne comportant aucun segment latéral et comprenant un dérivé amino éthyl acrylate comme monomère B, les fonctions amines résiduelles du squelette sont bloquées par réaction d'une molécule de type anhydride d'acide comme l'anhydride acétique, ou de type chlorure d'acide comme le chlorure d'éthanoyle.

La présente invention a aussi pour objet un procédé de synthèse d'un polymère selon l'invention dans lequel on prépare le squelette linéaire du polymère par accroissement de chaînes par l'une des méthodes généralement utilisées pour synthétiser des copolymères à blocs. Parmi ces méthodes, on choisit de préférence soit l'addition séquentielle du (ou des) monomère(s) correspondant à l'un des deux segments puis du (ou des) monomère(s) correspondant à l'autre segment, soit la synthèse préalable de l'un des deux segments, ledit segment étant ensuite utilisé comme macroamorceur ou macroagent de transfert pour la synthèse de l'autre segment.

L'une quelconque des techniques de polymérisation radicalaire vivante décrites précédemment peut être utilisée pour la synthèse de chaque segment, de préférence la polymérisation par transfert réversible de chaîne par addition/fragmentation (RAFT).

Le premier segment et le deuxième segment sont synthétisés soit par la même technique soit par une combinaison de deux techniques différentes.

L'homme du métier optera pour une stratégie de synthèse du squelette (ordre d'introduction des monomères) en fonction de la nature des monomères A, B, C choisis pour constituer le squelette et en fonction de la technique de polymérisation retenue.

Par exemple, si A est le t-butyl acrylate, si B est le NAS et si C est le NAM, on prépare le squelette par la méthode du macroagent de transfert en utilisant la technique de polymérisation RAFT. Dans un premier temps, un copolymère statistique de NAS et de NAM est synthétisé par la technique RAFT. Dans un deuxième temps, ce copolymère est utilisé comme macroagent de transfert pendant la polymérisation par la technique RAFT de t-butyl acrylate. Il en résulte un allongement des chaînes copolymères par un segment d'homopoly(t-butyl acrylate).

Dans un autre exemple, si A est le styrène, si B est le NAS et si C est le NAM, on prépare le squelette par la méthode d'addition séquentielle des monomères en utilisant la technique de polymérisation RAFT. Dans ce cas, le styrène est polymérisé donnant lieu au premier segment puis un mélange de NAS et de NAM est introduit afin de synthétiser le deuxième segment consécutivement au premier. L'ordre inverse peut aussi être réalisé.

Dans le cas où le squelette du polymère comprend un segment d'éloignement, le procédé de synthèse est similaire, soit par addition séquentielle des monomères correspondants aux différents segments, soit par synthèse successive de macroamorceurs, toujours par l'une quelconque des techniques de polymérisation radicalaire vivante.

Dans le cas de la synthèse d'un polymère comprenant au moins un segment latéral, ce procédé de synthèse comprend les étapes suivantes :

- l'on prépare le squelette linéaire du polymère par accroissement de chaînes à partir d'une des extrémités du polymère tel que décrit précédemment.

- l'on prépare indépendamment le segment latéral par une technique de polymérisation contrôlée choisie parmi les techniques comprenant la polymérisation cationique vivante, la polymérisation anionique vivante, la polymérisation radicalaire par transfert réversible de chaîne par addition/fragmentation (RAFT), puis l'on introduit sur ledit segment latéral, à une extrémité, une fonction réactive capable de réagir avec la fonction réactive X du monomère B présent sur le squelette,
- l'on met en présence le squelette linéaire et plusieurs segments latéraux pour permettre la fixation covalente des segments latéraux le long du squelette.

A titre d'exemple, si A est le t-butyl acrylate, si B est le NAS et si C est le NAM, on prépare le squelette par la méthode du macroagent de transfert en utilisant la technique de polymérisation RAFT. Dans un premier temps, un copolymère statistique de NAS et de NAM est synthétisé par la technique RAFT. Dans un deuxième temps, ce copolymère est utilisé comme macroagent de transfert pendant la polymérisation par la technique RAFT de t-butyl acrylate. Il en résulte un allongement des chaînes copolymères par un segment d'homopoly(t-butyl acrylate).

Concernant le segment latéral, si D est le 1,2:3,4-di-*O*-isopropylidene-6-*O*-(2-vinyloxy ethyl)-D-galactopyranose), le segment latéral est obtenu par polymérisation cationique vivante. Compte tenu de la présence de fonctions réactives X de type ester activé sur le squelette, le segment latéral est fonctionnalisé en extrémité avec une fonction amine, ou hydrazine.

Un grand nombre de segments latéraux sont introduits dans une solution du squelette en présence de triéthylamine. La fonction résultante de la fixation des segments latéraux sur le squelette est une fonction de type peptidique ou hydrazinopeptidique, très stable.

Dans un autre exemple, si A est le t-butyl acrylate, si B est le 2-amino éthyl acrylate et si C est le NAM, on prépare le squelette par la méthode du macroagent de transfert en utilisant la technique de polymérisation RAFT. Dans un premier temps, un copolymère statistique de B et de C est synthétisé par la technique RAFT. Dans un deuxième temps, ce copolymère est utilisé comme macroagent de transfert pendant la polymérisation par la technique RAFT de t-butyl acrylate. Il en résulte un allongement des chaînes copolymères par un segment d'homopoly(t-butyl acrylate).

Concernant le segment latéral, si D est le chloro éthyl vinyl éther, le segment latéral est obtenu par polymérisation cationique vivante. Compte tenu de la présence de fonctions réactives X de type amine sur le squelette, le segment latéral est fonctionnalisé en extrémité avec une fonction aldéhyde.

Un grand nombre de segments latéraux sont introduits dans une solution du squelette du polymère (ledit squelette comprenant les monomères A, B, C et éventuellement E). La fonction résultante de l'ancrage du segment latéral sur le squelette est une fonction de type imine stabilisée par réduction en amine secondaire (par exemple par l'utilisation de $NaBH_4$).

La figure 1 représente un exemple de spectre RMN HI pour le suivi cinétique de la consommation des monomères comme décrit dans l'exemple 1. Le pic du trixoane est visible à 5,1 ppm (rectangle droit), les pics correspondants aux protons du NAM sont indiqués par les traits qui partent du rectangle central et les pics correspondants aux protons du NAS sont indiqués par les traits qui partent du rectangle gauche.

La figure 2 représente l'évolution de la composition du copolymère NAM/NAS en fonction du taux de conversion (%) pour différents rapports molaires des momomères NAM/NAS dans le mélange initial : 80/20 ; 70/30 ; 60/40 ; 50/50 ; 20/80 comme décrit dans l'exemple 1.

La figure 3 représente la masse molaire exprimée en g/mole du copolymère AF 44 en fonction du taux de conversion des monomères exprimé en % (voir exemple 2).

Les exemples qui suivent permettent d'illustrer quelques avantages de l'invention sans toutefois en limiter la portée.

## Exemple 1: synthèse de squelettes NAM/NAS par radicalaire conventionnelle

Mode opératoire général :

Le N-Acryloylmorpholine (NAM, vendu par POLYSCIENCES, INC, référence 21192) est distillé avant utilisation en polymérisation.

Le N-Acryloxysuccinimide (NAS, vendu par ACROS, référence 40030) est purifié par chromatographie sur colonne de silice avant utilisation en polymérisation.

Le dioxane (solvant) (vendu par SDS, référence 27,053-9) est distillé sur $LiAlH_4$ avant utilisation.

L'azobis-isobutyronitrile AIBN (amorceur de polymérisation) (Fluka, référence 11630) est recristallisé dans l'éthanol.

Le trioxane (référence interne pour le suivi R.M.N. $^1H$, vendu par JANSSEN-CHIMICA, référence 14.029.61) est utilisé tel quel.

Les expériences d'homopolymérisation du NAM et de copolymérisation du NAM avec le NAS ont été effectuées

dans un ballon tricol de capacité 100 mL, équipé d'un système d'agitation magnétique et d'une arrivée d'azote.

Les monomères, le trioxane et le solvant sont introduits dans le ballon et le mélange est dégazé pendant une heure grâce à un bullage d'azote afin d'éliminer toute trace d'oxygène dissout.

Le mélange réactionnel est porté à 60°C pendant quinze minutes.

Pendant ce quart d'heure, l'AIBN, dissout dans 0,5 mL de dioxane, est dégazé grâce à un bullage d'azote.

Il est ensuite rapidement introduit dans le ballon à l'aide d'une seringue préalablement soumise à un courant d'azote.

C'est le temps zéro des polymérisations.

Pendant toute la durée de la manipulation, l'arrivée d'azote est maintenue au dessus du milieu réactionnel et ce pour éviter d'éventuels sites préférentiels de polymérisation (seringue).

Des prélèvements d'environ 500 µL sont effectués à des temps déterminés, transvasés dans des flacons contenant des traces d'hydroquinone (vendu par JANSSEN-CHIMICA, référence 123-3169) et placés dans un bain de glace.

En fin de réaction, le polymère est récupéré par précipitation dans l'éther puis séché sous vide de la pompe à palettes pendant une nuit.

Suivi cinétique de la polymérisation :

Le suivi cinétique de la consommation des monomères est réalisé par R.M.N. $^1$H (Résonance Magnétique Nucléaire) sur un spectromètre VARIAN UNITY PLUS 500 MHz.

Les échantillons à analyser sont préparés en mélangeant 300 µL de chaque prélèvement à 300 µL de solvant deutérié, le $CDCl_3$. L'analyse R.M.N. $^1$H est effectuée en irradiant le pic du dioxane. Cette méthode présente l'avantage d'analyser le milieu réactionnel sans évaporer le solvant de synthèse et permet donc d'éviter d'éventuelles transformations des produits.

La diminution des pics relatifs aux protons vinyliques des monomères est suivie en fonction du temps par rapport à une référence interne, le trioxane. Le trioxane a la particularité de présenter un pic R.M.N. $^1$H sous la forme d'un singulet fin, intense, et isolé des protons vinyliques des deux monomères, NAM et NAS. (voir figure 1 pour un exemple de spectre de R.M.N.)

Les conversions des deux monomères sont obtenues par :

$$C_{NAM} = 1 - \frac{\left(\frac{H_{NAM}}{H_{trioxane}}\right)_t}{\left(\frac{H_{NAM}}{H_{trioxane}}\right)_0} \quad \text{et} \quad C_{NAS} = 1 - \frac{\left(\frac{H_{NAS}}{H_{trioxane}}\right)_t}{\left(\frac{H_{NAS}}{H_{trioxane}}\right)_0}$$

avec $C_{NAS}$ : conversion en NAS,

$C_{NAM}$ : conversion en NAM,
$H_{NAM}$ : intégrale relative à un proton du NAM,
$H_{NAS}$ : intégrale relative à un proton du NAS,
$H_{trioxane}$: intégrale relative aux six protons du trioxane.

L'étude cinétique réalisée a permis de déterminer les taux de réactivité en copolymérisation de ce couple de monomères :

$$r_{NAS} = 0{,}63 \text{ et } r_{NAM} = 0{,}75$$

Ces valeurs indiquent que la dérive de composition est très faible au cours de la copolymérisation, ce qui revient à dire que les chaînes macromoléculaires formées sont très homogènes en composition, et possèdent une composition proche de celle du mélange initial de monomères (figure 2, qui représente l'évolution de la composition du copolymère NAM/NAS en fonction du taux de conversion (%) pour différents rapports molaires des momomères

NAM/NAS dans le mélange initial : 80/20 ; 70/30 ; 60/40 ; 50/50 ; 20/80).

Ceci est particulièrement vrai pour la composition dite "azéotropique", qui correspond à un ratio NAM/NAS de 60/40. Les conditions opératoires utilisées et les caractéristiques des différents copolymères synthétisés sont résumées dans les tableaux ci-dessous :

Tableau A : Copolymères de rapport molaire NAM/NAS variable et de masses molaires similaires de l'ordre de 100 000 g/mol.

Concentration initiale en monomères des essais:

| Référence du copolymère | $[NAM]_0$ (mol.L$^{-1}$) | $[NAS]_0$ (mol.L$^{-1}$) | [Trioxane] (mol.L$^{-1}$) |
|---|---|---|---|
| **COPO 1** | 0,810 | 0,200 | 0,063 |
| **COPO 2** | 0,703 | 0,300 | 0,059 |
| **COPO 3** | 0,590 | 0,400 | 0,050 |
| **COPO 4** | 0,500 | 0,500 | 0,040 |

Tous ces essais sont réalisés dans le dioxane à 60°C, en présence d'une concentration d'amorceur, [AIBN] = 0,005 mol.L$^{-1}$.

Caractéristique des copolymères :

| Référence du copolymère | Conversion (%) | | Composition NAM/NAS (*) | $M_n$** (g.mol$^{-1}$) | $N_{pic}$** (g.mol$^{-1}$) | $I_p$** |
|---|---|---|---|---|---|---|
| | NAM | NAS | | | | |
| **COPO 1** | 94,6 | 98,3 | 80/20 | 79 200 | 145500 | 2,0 |
| **COPO 2** | 89,0 | 91,7 | 70/30 | 94 000 | 153500 | 1,8 |
| **COPO 3** | 82,5 | 81,7 | 60/40 | 94 000 | 137800 | 1,7 |
| **COPO 4** | 82,0 | 76,6 | 51/49 | 101200 | 162000 | 1,8 |
| (*) obtenue à partir de l'équation de copolymérisation en utilisant les taux de réactivité déterminés auparavant.<br>(**) : Mn est la masse molaire moyenne en nombre des chaînes polymères formées, $M_{pic}$ correspond à la masse molaire de la population majoritaire, et Ip est l'indice de polymolécularité reflétant l'homogénéité des masses des chaînes polymères (plus Ip est proche de 1, plus les chaînes polymères sont homogènes en masse). | | | | | | |

Ces données sont obtenues par chromatographie d'exclusion stérique (C.E.S.)dans le DMF, avec étalonnage polystyrène c'est à dire :

Colonne : Polymer Laboratories Gel Mixed column, type C ; pompe : Waters 510; détecteur UV : Waters 484 ; détecteur réfractométrique différentiel : Waters 410 ; éluant : diméthylformamide (DMF) ; Débit : 0,5 mL.min$^{-1}$ ; température : 55°C ; étalons : standards Polystyrène.

Les mesures des masses des copolymères par la technique de référence C.E.SJD.D.L.
sont données ci-dessous :

| Référence du copolymère | $M_n$* (g.mol$^{-1}$) | $M_{pic}$* (g.mol$^{-1}$) | $I_p$* |
|---|---|---|---|
| **COPO 1** | 98200 | 137 000 | 1,8 |
| **COPO 2** | 112 300 | 142 600 | 1,8 |
| **COPO 3** | 121200 | 131900 | 2,0 |
| **COPO 4** | 87100 | 82 000 | 1,4 |
| * : Conditions d'analyses par Chromatographie d' Exclusion Stérique (C.E.S.) couplé à un détecteur de diffusion dynamique de la lumière (DDL) : | | | |

Colonnes : Ultra Hydrogel 500 et 2000 (Waters) ; pompe : Waters 510; détecteur UV : Waters 484 ; détecteur réfractométrique différentiel : Waters 410 ; détecteur Diffusion Dynamique de la Lumière : Trois angles, miniDawn, Wyatt Technology ; éluant :tampon borate 0,05 M pH = 9.3 ; débit : 0,5 $mL.min^{-1}$.

Tableau B : Copolymères NAM/NAS ou Acrylamide/NAS (AAm/NAS) de rapport molaire constant : 80/20 et de masses molaires variables

Conditions opératoires de synthèse

| *Référence du copolymère* | [M] ($mol.L^{-1}$) | [AIBN] (%[M]) | T (°C) | Solvant | Durée de polymérisation (heures) | comonomère utilisé avec le NAS |
|---|---|---|---|---|---|---|
| FD2 | 1,00 | 1 | 60 | DMF | 4 | AAm |
| FD3 | 0,80 | 1 | 60 | DMF | 4 | AAm |
| FD20 | 0,65 | 1 | 60 | DMF | 4 | AAm |
| FD5 | 1,00 | 0,5 | 60 | DMF | 2 | AAm |
| FD19 | 1,00 | 1 | 55 | DMF | 4 | AAm |
| FD21 | 1,00 | 1 | 50 | DMF | 4 | AAm |
| FD14 | 1,00 | 0,5 | 60 | DMF | 2 | NAM |
| FD15 | 1,00 | 0,5 | 60 | Toluène | 4 | NAM |
| FD16 | 1,00 | 0,5 | 60 | Dioxane | 2 | NAM |
| [M] = [NAM] + [NAS] ou [AAm] + [NAS] avec [ ] pour indiquer la concentration. | | | | | | |

Mesure des tailles des copolymères

| | **CES/DDL*** | | |
|---|---|---|---|
| **Référence du copolymère** | **$M_n$ ($g.mol^{-1}$)** | **$M_{p/c}$ ($g.mol^{-1}$)** | **$I_p$** |
| **FD2** | **33 100** | **37 700** | **1,5** |
| **FD3** | **27 300** | **25 500** | **1,7** |
| **FD20** | **12 090** | **-** | **1,7** |
| **FD5** | **45 200** | **55 500** | **1,4** |
| **FD19** | **27 600** | **32 400** | **1,8** |
| **FD21** | **Pas de polymérisation** | | |
| **FD14** | **79 400** | **89 600** | **1,6** |
| **FD15** | **-** | **-** | **-** |
| **FD16** | **107 400** | **133 500** | **1,6** |

* : Conditions d'analyses par Chromatographie d'Exclusion Stérique (C.E.S.) couplé à un détecteur de diffusion dynamique de la lumière (DDL) :

Colonnes : Ultra Hydrogel 500 et 2000 (Waters) ; pompe : Waters 510 ; détecteur UV : Waters 484 ; détecteur réfractométrique différentiel : Waters 410 ; détecteur Diffusion Dynamique de la Lumière : Trois angles, miniDawn, Wyatt Technology ; éluant :tampon borate 0,05 M pH = 9.3 ; débit : 0,5 $mL.min^{-1}$.

Analyse par R.M.N. $^{13}C$ du copolymère de NAM et de NAS : numérotation et attributions des carbones dans l'analyse :

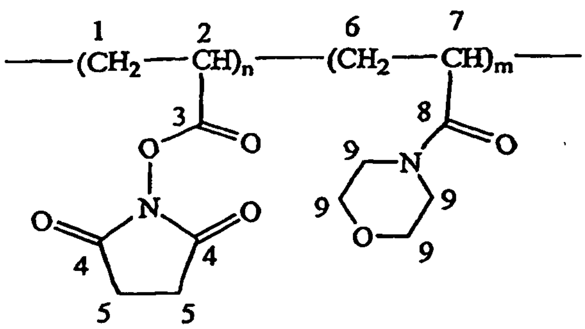

| Position du carbone | Déplacement chimique en ppm (DMSO-d6, 360K) |
|---|---|
| 1 | 35 (raie large) |
| 2 | 41 (raie large) |
| 3 | 169-171 (raie large) |
| 4 | 169 (raie fine) |
| 5 | 25 (raie fine) |
| 6 | 35 (raie large) |
| 7 | 41 (raie large) |
| 8 | 171-173 (raie large) |
| 9 | 65 (raie fine) |

**Exemple 2: synthèse de squelettes NAM/NAS par polymérisation radicalaire contrôlée de type RAFT.**

La synthèse d'homopolymères de NAM ainsi que de copolymères statistiques de NAM et de NAS (rapport molaire 80/20) a été effectuée par le procédé RAFT, en utilisant comme agent de transfert de type dithioester, l'acide thiobenzoyl thioglycolique (I) (vendu par Aldrich, référence 15,788-0) ou de préférence le dithiobenzoate de tertiobutyle (II).

Ce procédé permet d'obtenir des chaînes monodisperses et de masses molaires contrôlables en fonction de la conversion.

Les chaînes polymères formées portent à l'une de leurs extrémités une fonction dithioester (aisément hydrolysable en fonction thiol par exemple par l'action d'une amine primaire), et à l'autre extrémité soit une fonction carboxylique soit une fonction t-butyle en utilisant le dithioester I ou II.

Synthèse du dithiobenzoate de tertiobutyle (ou t-butyl) (II):

Cette synthèse a été élaborée à partir d'un mode général de réaction de thiol ou de thiolate sur un dithioester, décrit dans l'article suivant : Leon N.H., Asquith R. S., Tetrahedron, 26, 1719-1725 (1970).

Dans un ballon de 500 mL, 150 ml d' une solution d'acide thiobenzoyl thioglycolique à 0,016 $mol.L^{-1}$ dans l'éther diéthylique est ajoutée sous forte agitation et à température ambiante à 100 mL d'une solution aqueuse basique (NaOH 0,1 N) de t-butyle thiolate de sodium (vendu par Aldrich, référence 35,930-0) à 0,028 $mol.L^{-1}$ (1,2 équivalents).

Après 12h de réaction, la phase éthérée est lavée avec deux fois 500 mL d'une solution aqueuse basique (NaOH IN) puis avec 500 mL d'une solution aqueuse 10% NaCl.

Le dithiobenzoate de t-butyle est purifié par chromatographie sur gel de silice (Kieselgel-60 ; éluant $CH_2Cl_2$) ; le produit purifié est obtenu avec un rendement supérieur à 90%.

Mode opératoire des (co)polymérisations :

Les différents réactifs sont introduits dans un réacteur de type Schlenk à température ambiante, et le mélange est dégazé par une succession de cycles de congélation/vide/ décongélation, puis mis sous azote.

Le mélange réactionnel est porté à 60°C et laissé sous agitation pendant une trentaine d'heures. Le polymère est précipité dans l'éther et séché sous vide de la pompe à palettes.

Conditions opératoires de l'homopolymérisation du NAM (AF06 et AF37) et de la copolymérisation du NAM avec le NAS (AF09, FD73 et AF44) par le procédé RAFT :

| Référence des essais | Dithioester | NAM/NAS | [monomères] ($mol.L^{-1}$) | Solvant | [monomères]/ [ dithioester] | [dithioester] / [AIBN] |
|---|---|---|---|---|---|---|
| **AF06** | I | 100/0 | 3,9 | dioxane | 350 | 3,3 |
| **AF37** | II | 100/0 | 3,9 | dioxane | 350 | 3,3 |
| **AF09** | 1 | 80/20 | 3,9 | dioxane | 350 | 3,3 |
| **FD73** | I | 80/20 | 4 | dioxane | 350- | 4 |
| **AF44** | II | 80/20 | 3,9 | dioxane | 350 | 3,3 |
| [X] signifie concentration en réactif X. | | | | | | |

Caractéristiques des polymères obtenus (C.E.S. couplée à un détecteur D.D.L.) :

| **Référence des essais** | **Temps de réaction (heures)** | **Conversion en monomère(s)** (%) | **Mn ($g.mol^{-1}$)** | **Mpic ($g.mol^{-1}$)** | **Ip** |
|---|---|---|---|---|---|
| **AF06** | 2 | 5 | 33000 | 41000 | 1,18 |
| | 4 | 11 | 39000 | 48000 | 1,17 |
| | 6 | 26 | 49000 | 52000 | 1,11 |
| | 8 | 39 | 55000 | 61000 | 1,11 |
| | 30 | 68 | 75000 | 81000 | 1,13 |
| **AF37** | 1,25 | 9 | 9900 | 9000 | 1,17 |
| | 1,66 | 32 | 22700 | 24000 | 1,02 |
| | 2 | 42 | 29700 | 30800 | 1,02 |
| | 3,5 | 68 | 53700 | 53600 | 1,03 |
| | 5,5 | 78 | 59700 | 60200 | 1,05 |
| | 7 | 86 | 68200 | 67600 | 1,06 |
| | 22 | 97 | 76100 | 78800 | 1,12 |
| **AF09** | 2 | 7 | 41300 | 46700 | 1,25 |

Suite de tableau

| Référence des essais | Temps de réaction (heures) | Conversion en monomère(s) (%) | Mn (g.mol$^{-1}$) | Mpic (g.mol$^{-1}$) | Ip |
|---|---|---|---|---|---|
| | 4 | 13 | 47400 | 51900 | 1,29 |
| | 6 | 19 | 54000 | 57000 | 1,23 |
| | 8 | 29 | 57600 | 62000 | 1,24 |
| | 24 | 60 | 80000 | 88500 | 1,26 |
| | 33 | 74 | 80000 | 92600 | 1,28 |
| **FD73** | 30 | 100 | 95000 | 103000 | 1,30 |
| **AF44** | 2,75 | 8 | 6400 | 5900 | 1.18 |
| | 3,5 | 32 | 20700 | 20300 | 1.02 |
| | 6 | 68 | 46000 | 43700 | 1.03 |
| | 8 | 82 | 55700 | 52300 | 1.04 |
| | 10 | 89 | 60100 | 56700 | 1.05 |
| | 32 | 98 | 69900 | 64100 | 1.09 |

Les conditions C.E.S. / D.D.L. sont décrites pour le tableau B de l'exemple 1.

En fonction de la cinétique de la réaction il est possible de contrôler la masse molaire $M_{pic}$ du polymère et par exemple d'obtenir une masse molaire supérieure à 40.000 g/mole pour la population majoritaire.

Les masses molaires des polymères synthétisés croissent avec la conversion, de manière parfaitement linéaire (Figure 3 qui représente la masse molaire exprimée en g/mole du copolymère AF 44 en fonction du taux de conversion exprimé en % ), ce qui permet d'envisager la synthèse de copolymères de longueur variable selon la conversion à laquelle la copolymérisation est stoppée, et de manière parfaitement contrôlée et reproductible. De plus, les indices de polymolécularité, Ip, sont très faibles, particulièrement lors de l'utilisation du dithioester II, ce qui indique que les chaînes polymères formées sont très homogènes en taille.

**Exemple 3: synthèse d'un squelette à blocs $^{t}$BuA-b-NAM/NAS par technique de polymérisation RAFT.**

Le procédé RAFT permet la synthèse d'un squelette à blocs, présentant un bloc hydrophobe de poly(tertiobutyl acrylate, $^{t}$BuA), et un bloc hydrophile et fonctionnel constitué d'un copolymère statistique NAM/NAS.

En fait, ce copolymère diblocs est obtenu en deux étapes : l'un des deux blocs est synthétisé dans un premier temps, puis, ces chaînes polymères (portant une fonction dithioester à l'une de leurs extrémités) sont utilisées comme (macro)agent de transfert lors de la polymérisation du monomère correspondant au deuxième bloc. Des copolymères diblocs sont alors obtenus, en mélange avec une faible quantité d'homopolymère du deuxième bloc.

C'est le copolymère NAM/NAS FD73 qui a été utilisé comme (macro)agent de transfert lors de la polymérisation de t-butyl acrylate.

Mode opératoire :

Dans un réacteur de type Schlenck, du copolymère FD73 (2,5 g) de l'exemple 2, du $^{t}$BuA (2,9 g, soit la quantité nécessaire pour allonger les chaînes de copolymères FD73 par un bloc de 65 000 g.mol$^{-1}$ à 100% de conversion, produit fourni par Aldrich, référence 37,718-2), de l'amorceur AIBN (Fluka, référence 11630) (rapport molaire (macro)agent de transfert / AIBN de 4) sont dissous dans 7,5 ml de dioxane.

Le mélange est dégazé par une succession de cycles de congélation/vide/décongélation, puis mis sous azote. Il est ensuite porté à 60°C et laissé sous agitation pendant 22 heures (conversion 66 %). Après dilution par du dichlorométhane, le polymère est précipité dans l'éther, récupéré par centrifugation et séché sous vide de la pompe à palettes. Le précipité n'est que partiellement soluble dans un tampon borate.

L'analyse par RMN $^{1}H$ de la fraction insoluble confirme la présence de motifs de poly($^{t}$BuA) et de poly (NAM/NAS) ; cette fraction correspond donc au copolymère à blocs $^{t}$BuA-b-NAM/NAS référencé FD77.

Tenant compte de l'estimation de la proportion de chaînes de FD73 ayant effectivement subies l'élongation et de la conversion du monomère $^{t}$BuA, la longueur du bloc P$^{t}$BuA est de l'ordre de 250 000 g.mol$^{-1}$.

**Exemple 4: synthèse du segment hydrophobe du squelette par polymérisation radicalaire contrôlée de type RAFT.**

La synthèse d'homopolymères hydrophobes de tertiobutyl acrylate ($^tBuA$), de tertiobutyl acrylamide ($^tBuAAm$, vendu par ALDRICH, référence 41,177-9) et d'octadécyl acrylamide (ODAAm, vendu par POLYSCIENCES, INC., référence 04673-10) a été effectuée par le procédé RAFT, en utilisant comme agent de transfert de type dithioester, l'acide thiobenzoyl thioglycolique (I) (vendu par Aldrich, référence 15,788-0) ou de préférence le dithiobenzoate de t-butyle (II) (voir exemple 2).

Comme expliqué précédemment, ce procédé permet d'obtenir des chaînes monodisperses et de masses molaires contrôlables en fonction de la conversion.

Les chaînes polymères formées portent à l'une de leurs extrémités une fonction dithioester (qui permettra la synthèse d'un deuxième bloc, hydrophile, consécutivement au premier bloc hydrophobe), et à l'autre extrérnité, soit une fonction carboxylique, soit une fonction t-butyle, selon que le dithioester I ou II a été utilisé comme agent de transfert respectivement.

Il est à noter que les monomères $^tBuAAm$ et ODAAm sont des acrylamides mono-substitués, et donc présentant un hydrogène sur la fonction amide, ce qui rend difficilement contrôlable leur polymérisation par un autre procédé de polymérisation radicalaire contrôlée, par exemple le procédé ATRP.

Mode opératoire des polymérisations :

Les différents réactifs sont introduits dans un réacteur de type Schlenk à température ambiante, et le mélange est dégazé par une succession de cycles de congélation/vide/ décongélation, puis mis sous azote.

Le mélange réactionnel est porté à 60°C ou 90°C et laissé sous agitation pendant une trentaine d'heures. Dans le cas du $^tBuA$, le polymère est purifié par co-évaporation du monomère résiduel, du dioxanne et du trioxanne avec de l'acétonitrile (2 x 200 ml), puis séché sous vide de la pompe à palettes. Dans le cas du $^tBuAAm$, le polymère est purifié par co-évaporation du monomère résiduel, du dioxanne et du trioxanne avec du DMF (2 x 200 ml), puis séché sous vide.

Dans le cas du ODAAm, le polymère est purifié par précipitation dans l'éther, puis séché sous vide de la pompe à palettes.

Conditions opératoires de l'homopolymérisation du $^tBuA$ (MTC 901, AF41, AF49, AF60, AF72) du $^tBuAAm$ (BDL1), et du ODAAm (BDL2) par le procédé RAFT :

| Référence des polymères | Dithioester | Nature du monomère | [monomère] (mol.L$^{-1}$) | Solvant | [monomère] /[dithioester] | [dithioester] /[AIBN] | Température |
|---|---|---|---|---|---|---|---|
| **MTC 901** | **I** | $^{t}$BuA | 3,4 | dioxanne | 153 | 4,1 | 60°C |
| **AF41** | **II** | $^{t}$BuA | 3,4 | dioxanne | 350 | 3,3 | 60°C |
| **AF49** | **II** | $^{t}$BuA | 4 | dioxanne | 350 | 3,3 | 90°C |
| **AF60** | **II** | $^{t}$BuA | 1 | dioxanne | 350 | 3,3 | 90°C |
| **AF72** | **II** | $^{t}$BuA | 4 | dioxanne | 630 | 3,3 | 90°C |
| **BDL1** | **II** | $^{t}$BuAAm | 1 | dioxanne | 400 | 3,3 | 90°C |
| **BDL2** | **II** | ODAAm | 1 | dioxanne | 154 | 3,3 | 90°C |
| [X] signifie : concentration en réactif X. | | | | | | | |

Caractéristiques des polymères (masses molaires obtenues par C.E.S. en DMF ou THF*):

| Référence des essais | Temps de réaction (heures) | Conversion en monomère(s) (%) | Mn ($g.mol^{-1}$) | Mpic ($g.mol^{-1}$) | Ip |
|---|---|---|---|---|---|
| **MTC901** | 5,5 | 6 | 6500 | 11900 | 1,8 |
| | 7,0 | 8 | 6600 | 11900 | 1,8 |
| | 20,3 | 20 | 8900 | 14400 | 1,7 |
| | 29,0 | 30 | 11100 | 21100 | 1,7 |
| **AF41** | 24 | 33 | 27600 | 39000 | 1,26 |
| **AF49** | 0,33 | 34 | 16600 | 21900 | 1,27 |
| | 0,50 | 48 | 22800 | 31100 | 1,29 |
| | 0,67 | 58 | 25500 | 38300 | 1,38 |
| | 0,83 | 64 | 32500 | 43700 | 1,25 |
| | 1 | 69 | 33700 | 45800 | 1,29 |
| **AF60** | 1 | 30 | 39900 | 46200 | 1,2 |
| | 4 | 64 | 46800 | 50300 | 1,3 |
| **AF72** | 0,67 | 70 | 43000 | 58000 | 1,3 |
| **BDL1*** | 0,17 | 29 | ** | 4300 | ** |
| | 0,42 | 35 | ** | 13800 | ** |
| | 1 | 59 | ** | 21100 | ** |
| | 1,5 | 65 | ** | 31000 | ** |
| | 2 | 69 | ** | 33400 | ** |
| **BDL2*** | 0,5 | 4 | 5400 | 5200 | 1,14 |
| | 1 | 46 | 12900 | 16400 | 1,28 |
| | 1,5 | 62 | 17900 | 23800 | 1,35 |
| | 18 | 74 | 17800 | 24900 | 1,36 |
| | 25 | 77 | 17600 | 25300 | 1,37 |
| * Les conditions C.E.S./DMF sont décrites dans l'exemple 1, et les conditions C.E.S./THF sont décrites dans l'exemple 8.<br>** valeurs non déterminables par suite de la superposition du pic du monomère résiduel. | | | | | |

Les masses molaires des polymères synthétisés croissent avec la conversion, de manière linéaire, ce qui permet d'envisager la synthèse de segments hydrophobes de longueur variable selon la conversion à laquelle la polymérisation est stoppée, et ceci de manière parfaitement contrôlée et reproductible.

De plus, les indices de polymolécularité, Ip, sont faibles, particulièrement lors de l'utilisation du dithioester II, ce qui indique que les chaînes polymères formées sont homogènes en taille.

Enfin, par le contrôle de la cinétique il est possible d'obtenir pour tous les combinaisons de polymère une masse molaire $M_{pic}$ de segment hydrophobe supérieure à 10.000 g/mole.

**Exemple 5 : synthèse d'un squelette tri-blocs $^{t}$BuA-b-NAM-b-NAM/NAS comprenant un segment intermédiaire par polymérisation radicalaire contrôlée de type RAFT.**

Dans un réacteur de type Schienck, du poly($^{t}$BuA) AF72 (1 g, Mn = 58 000 $g.mol^{-1}$ soit 1,72 $10^{-5}$ moles) de l'exemple 4, du NAM (0.58 g), et de l'amorceur AIBN (1,5 mg) sont dissout dans 2,5 ml de dioxanne.

Le mélange est dégazé par une succession de cycles de congélation/vide/décongélation, puis mis sous azote. Il est ensuite porté à 90°C et laissé sous agitation.

Au bout de 40 minutes (conversion 72 %), un mélange de NAM et de NAS en solution dans du dioxanne (0, 362 g de NAM et 0,545 g de NAS dans 4,6 ml de dioxanne) est ajouté (ce mélange a été préalablement dégazé par trois cycles de congélation/vide/décongélation puis mis sous azote).

Compte tenu de la quantité de NAM résiduelle au moment de l'ajout, le mélange réactionnel correspond à un rapport molaire NAM/NAS de 54/46. Au bout de 20 minutes, la réaction est stoppée (81 % de conversion du mélange des monomères).

Le milieu réactionnel est précipité dans l'éther. Le précipité est récupéré par filtration et séché sous vide de la pompe à palettes. D'autre part, le résidu obtenu après concentration du filtrat est séché sous vide.

L'analyse RMN $^1H$ de ce résidu confirme la présence de motifs de poly($^tBuA$) et de poly(NAM/NAS) ; cette fraction correspond au copolymère à blocs poly($^tBuA$-b-NAM-b-NAM/NAS), référencé AF73. Compte tenu de la masse molaire du bloc hydrophobe (58 000 $g.mol^{-1}$) ainsi que de la conversion, l'analyse RMN $^1H$ permet d'estimer la longueur du segment poly(NAM/NAS) à environ 41 000 $g.mol^{-1}$ et celle du segment intermédiaire poly(NAM) à 11 000 $g.mol^{-1}$.

**Exemple 6: immobilisation du squelette à blocs $^tBuA$-b-NAM/NAS par adsorption sur support plan hydrophobe inorganique.**

Obtention d'un wafer de silicium hydrophobe par silanisation :

Des plaques de silice sur silicium sont nettoyées dans du mélange sulfochromique à 120°C pendant quatre heures, de manière à régénérer les fonctions silanol de surface.

Après rinçage par de l'eau MilliQ, l'angle de contact de l'eau sur ces plaques est inférieur à 10° (non mesurable). Les plaques sont ensuite séchées sous courant d'azote et immédiatement plongées dans une solution de n-octadécylméthyldichlorosilane (ABCR référence S 10 6625-0) à 2% (v/v) dans le toluène pendant deux heures. Après rinçage intensif à l'acétone, les plaques sont ensuite séchées sous courant d'azote, puis sous air à 120°C pendant deux heures.

Après cette étape de silanisation, les supports présentent un angle de contact de l'eau de 102° à 108°.

Adsorption du copolymère à blocs $^tBuA$-b-NAM/NAS sur le wafer hydrophobe :

fin de vérifier l'influence de la présence du bloc hydrophobe $^tBuA$, deux copolymères sont comparés :

- le copolymère FD73 qui ne comporte pas de bloc $^tBuA$.
- le copolymère FD77, copolymère à blocs $^tBuA$-b- NAM/NAS.

Les essais d'adsorption sont réalisés par évaporations successives de gouttes d'une solution de chacun des deux copolymères dans le chloroforme, déposées à la surface du wafer. Les conditions expérimentales sont les suivantes :

- dépôts et évaporations successifs de 5 gouttes de 45 $\mu$L (à 200 $\mu g.mL^{-1}$ de copolymère dans le chloroforme) sur cinq supports,
- un des cinq supports n'est pas rincé,
- rinçage de deux des cinq supports par du chloroforme (2 à 3 mL en goutte à goutte),
- rinçage des deux autres supports par immersion en tampon borate (pH = 9,3, 20 minutes, 37°C), puis en tampon PBS Tween (une nuit à l'ambiante).

L'angle de contact de l'eau est mesuré sur chaque type de support. Les résultats sont reportés dans la tableau ci-dessous (Remarque: l'immersion d'une plaque ne comportant pas de copolymère dans le PBS Tween conduit à un angle de contact avec l'eau de 85°).

| Copolymère | Rinçage | Angle de contact en degré |
|---|---|---|
| FD73 | Aucun | 46 |
| | $CHCl_3$ | 101 |
| | Borate/PBS Tween | 69 |

Suite de tableau

| Copolymère | Rinçage | Angle de contact en degré |
|---|---|---|
| FD77 | Aucun | non mesurable |
| | $CHCl_3$ | 101 |
| | Borate/PBS Tween | 40 |

L'absence de bloc hydrophobe dans le copolymère FD73 ne lui permet pas de rester adsorbé sur le support hydrophobe. Il est éliminé lors des lavages en tampon aqueux.

L'angle de contact de l'eau, descendu à 46° lors de l'adsorption du polymère retrouve une valeur de 69° (ce qui se rapproche de celle du témoin, 85°) après les lavages, ce qui signifie que le polymère FD73 a été entraîné par le lavage

Par contre, dans le cas du copolymère à blocs FD77, l'angle de contact est de 40° après les lavages, ce qui signifie d'une part que la nature de la surface est devenue très hydrophile et d'autre part que le copolymère est adsorbé de manière hydrophobe sur le support par l'intermédiaire de son bloc $^{t}$BuA puisque le lavage n'entraîne pas le polymère

Dans les deux cas, un lavage par un solvant organique, $CHCl_3$, permet d'entraîner la totalité du copolymère, qu'il porte ou non un bloc, ce qui confirme dans le cas de FD77 que ce copolymère était bien immobilisé par adsorption hydrophobe et non par couplage covalent, par exemple par l'intermédiaire de quelques fonctions NAS du squelette qui auraient réagi sur des fonctions silanols résiduelles en surface du support.

**<u>Example 7 : synthèse du monomère saccharidique GVE</u>**

Le monomère 1,2:3,4-di-*O*-isopropylidene-6-*O*-(2-vinyloxy ethyl)-D-galactopyranose (appelé GVE) est obtenu à partir du galactose par une réaction de Williamson. Après formation in-situ de l'alcoolate du galactose protégé, celui-ci réagit en déplaçant le Cl (groupe partant) du chloroéthylvinyl éther.

Schéma réactionnel de synthèse du monomère saccharidique GVE. :

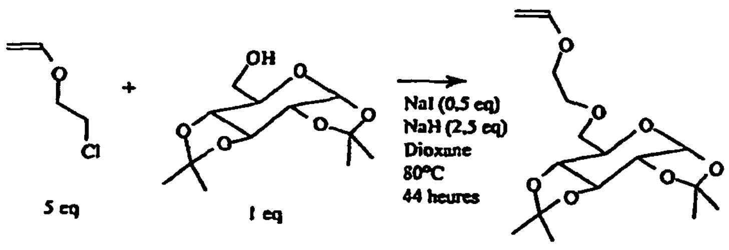


1

Une solution de 1,2:3,4-di-O-isopropylidene-D-galactose (10 g, 0,038 mol, Aldrich, référence D12,630-6) dans le dioxane (45 mL) est additionnée goutte à goutte à une suspension de NaH (4 g, 0,170 mol, Aldrich, référence 19,923-0) dans le dioxane (80 mL).

La température est portée à 80°C. Trois heures après, du NaI (2,9 g, 0,019 mol, Aldrich, référence 21,763-8) et une solution de 2-chloroethyl vinyl éther (20 g, 0,188 mol, Interchim > 97% référence C0174) dans le dioxane (45 mL) sont ajoutés et le mélange réactionnel est laissé à 80°C pendant deux jours.

Le mélange est alors dilué par de l'éther, lavé trois fois par une solution aqueuse saturée en $NH_4Cl$ puis par de l'eau distillée.

La phase organique est séchée sur $MgSO_4$, concentrée puis séchée sous vide de la pompe à palettes.

Le produit brut obtenu est purifié par chromatographie sur gel de silice (éluant : acétate d'éthyle / pentane 20/80 V/V).

Le produit désiré est obtenu sous forme d'une huile jaune (60 % de rendement).

Schéma 1 : Monomère saccharidique GVE : numérotation et attributions des carbones dans l'analyse par R.M.N. $^{13}C$.

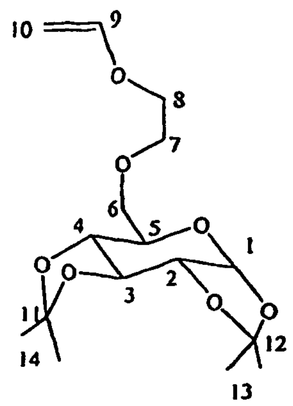

| Position du carbone | Déplacement chimique en ppm ($CDCl_3$) |
|---|---|
| 1 | 96,3 |
| 2 | 66,5-71,1 |
| 3 | |
| 4 | |
| 5 | |
| 6 | |
| 7 | |
| 8 | |
| 9 | 151,8 |
| 11 | 108,5 |
| 12 | 109,2 |
| 13 | 24,4-26,0 |
| 14 | |

**Exemple 8 : synthèse des greffons saccharidiques polyGVE et des greffons chloroalkyl polyCEVE**

Mode opératoire :

Le monomère 1,2:3,4-di-*O*-isopropylidene-6-*O*-(2-vinyloxy ethyl)-D-galactopyranose (GVE) est séché deux fois sur $CaH_2$ (Aldrich, référence 21,332-2), avant toute expérience de polymérisation cationique vivante.

Les polymérisations sont réalisées dans un réacteur de type schlenk. Chaque réactif y est transféré par l'intermédiaire d'une canule sous azote.

En premier lieu, 20 ml de toluène (Merck, référence 1.08325.1000) (solvant de la polymérisation) sont introduits dans le réacteur et refroidis à -20°C (ou -30°C).

De l'acetaldehyde diethyl acétal (Aldrich, référence A90-2) (en solution dans le toluène) est ajouté, puis de l'iodure de triméthyl silane (Aldrich, référence 19,552-9) (en solution dans le toluène, 1,1 équivalent par rapport à l'acétal).

La solution est agitée pendant 30 minutes. Le monomère (en solution dans le toluène) est ajouté ainsi que 0,2 équivalent de $ZnCl_2$ (Aldrich, référence 42,943-0) (en solution dans l'éther).

Le mélange réactionnel est laissé sous agitation à -20°C (ou -30°C) sous $N_2$, jusqu'à ce qu'une coloration orangée apparaisse, signe de la conversion totale du monomère.

Afin d'obtenir des chaînons polymères terminés par une fonction aldéhyde, le mélange réactionnel est transféré dans une solution aqueuse de KOH (pH =10-12) sous agitation vigoureuse et le pH est rapidement ajusté à neutralisation.

Le mélange hétérogène est laissé une heure sous agitation, et la phase organique est extraite par du dichlorométhane, lavée plusieurs fois par une solution aqueuse de thiosulfate de sodium puis par de l'eau.

La phase organique est séchée sur $MgSO_4$, concentrée et le polymère est séché sous vide de la pompe à palettes jusqu'à masse constante.

Schéma 2 :numérotation et attributions des carbones dans l'analyse par R.M.N. $^{13}C$. de l'homopolymère de GVE :

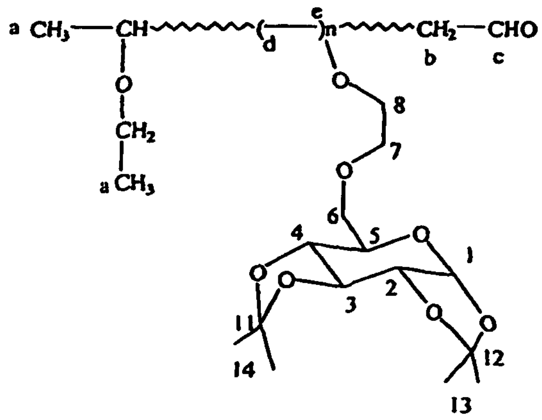

| Position du carbone | Déplacement chimique en ppm ($CDCl_3$) |
|---|---|
| 1 | 96,2 |
| 2, 3, 4 | 69,8-71,0 |
| 5 | 66,7 |
| 6, 7, 8 | 68,0 |
| 11, 12 | 108,0-109,5 |
| 13, 14 | 24,4-26,0 |
| a | 18,0-22,0 |
| b | 48,0 |
| c | 202,0 |
| d | 39,0-41,0 |
| e | 73,9 |

Tableaux récapitulatifs des greffons saccharidiques polyGVE synthétisés

Le premier tableau représente les conditions opératoires des essais et notamment les quantités de réactifs engagés.

| Référence essai | Diethyl Acetal] (mol.L-1) | [TMSil] (mol.L-1) | [GVE] (mol.L-1) | [$ZnCl_2$) (mol.L-1) | T (°C) |
|---|---|---|---|---|---|
| **FD30** | 0,010 | 0,012 | 0,078 | 0,0020 | -20 |
| **FD84** | 0,030 | 0,036 | 0,350 | 0,0060 | -20 |
| **FD33** | 0,005 | 0,006 | 0,075 | 0,0010 | -20 |
| **FD96** | 0,030 | 0,034 | 0,68 | 0,0060 | -30 |
| **FD67** | 0,005 | 0,006 | 0,152 | 0,0010 | -20 |
| **FD100** | 0 | 0,008 | 0,094 | 0,0004 | -30 |

Les caractéristiques des homopolymères obtenus sont données dans le tableau ci-dessous :

| Référence des essais | $M_n$ (g.mol-1) calculée | $M_n$ (g.mol-1) (R.M.N. 1H) | $M_n$ (g.mol-1) (C.E.S.) | $M_{pic}$(g.mol-1) (C.E.S.) | $I_P$ (C.E.S.) |
|---|---|---|---|---|---|
| **FD30** | 2500 | 2950 | 1200 | 1 700 | 1,26 |
| **FD84** | 3800 | 3900 | 2100 | 2400 | 1,17 |
| **FD33** | 5 000 | 5800 | 900 | 1 500 | 1,39 |
| **FD96** | 7 500 | 6200 | 3 400 | 3 900 | 1,11 |
| **FD67** | 10 000 | 5 800 | 3 200 | 4 500 | 1,24 |
| **FD100** | - | 13 600 | 5 500 | 6 900. | 1,37 |

Tableau récapitulatif d'autres types de greffons synthétisés (polychloroéthyl vinyl ether) polyCEVE :

Les segments latéraux préparés à base de polyCEVE présentent des fonctions chloroalkyl qui peuvent être utilisées pour le couplage covalent de ligands biologiques.

Ce polymère a été synthétisé selon une procédure décrite dans l'article : Héroguez V., Deffieux A. et Fontanille M., Makromol. Chem., Macromol. Symp., 32, 199 (1990).

| REF | $M_n$ (g.mol-1) calculée | $M_n$ (g.mol-1) (R.M.N. 1H) | $M_n$ (g.mol-1) (C.E.S.) | $M_{ple}$(g.mol-1) (C.E.S.) | $I_p$ (C.E.S.) |
|---|---|---|---|---|---|
| **FD21** | 5 000 | 4 200 | 4 300 | 5 400 | 1,20 |
| **FD23** | 5000 | 5 100 | 4 400 | 5 300 | 1,18 |
| **FD29** | 2000 | 1 900 | 1400 | 1 900 | 1,33 |
| **SC1F2** | 11 200 | * | 9 300 | 9 500 | 1,03 |
| **SC4** | 30000 | * | 22000 | 27 700 | 1,13 |
| **SC5C2** | 40 000 | * | 24 200 | 31000 | 1,24 |
| * méthode de détermination non appropriée pour des polymères de masse molaire supérieure à 5 000 g.mol-1. | | | | | |

Conditions d'analyses par C.E.S. dans le THF avec étalonnage polystyrène :

- Colonne : Polymer Laboratories Gel Mixed column, Type C,
- Pompe : Waters 510 High Perfomance Liquid Chromatography,
- Détecteur UV : Waters 2484,
- Détecteur réfractométrique différentiel : Waters 410,
- Eluant : Tétrahydrofurane (THF),
- Débit : 0,5 mL.min-1,
- Etalons : standards Polystyrène.

**Exemple 9 : déprotection des greffons saccharidiques polyGVE**

Mode opératoire :

La déprotection des motifs saccharidiques des greffons polyGVE s'effectue selon une procédure décrite dans la littérature.
Du polyGVE (1 g) est dissout dans 10 mL d'un mélange acide trifluoroacétique / eau (5/1, V/V).
Le milieu réactionnel est laissé à température ambiante pendant une heure, puis neutralisé par une solution saturée en $NaHCO_3$.
Le mélange est ensuite dialysé (membrane cellulose Spectra/Por 6, cut-off : 2 000 $g.mol^{-1}$) pour éliminer les sels, l'acide trifluoro acétique résiduel et l'acétone libérée lors de la déprotection. La solution dialysée est lyophilisée.
Le polymère déprotégé est analysé par R.M.N. $^1H$; le spectre confirme la disparition complète des groupements isopropylidènes sur les motifs saccharidiques.

**Exemple 10 : couplage d'ODN sur les greffons saccharidiques déprotégés :**

Des essais de couplage d'une séquence nucléotidique du virus de l'hépatite C (ODN 1) sur le polyGVE déprotégé ont été réalisés, selon différentes conditions décrites ci-dessous.

Séquence nucléotidique :

SEQ ID N° 1 : 5'-TCA-ATC-TCG-GGA-ATC-TCA-ATG-TTA-G-3'

Cette séquence comporte un bras de couplage $C_6$-$NH_2$ à l'extrémité 5' tel que décrit dans le WO 91/19812.
Cette réaction de couplage sur les homopolymères saccharidiques s'effectue par amination réductrice entre la fonction aldéhyde (masquée) présente sur chaque motif saccharidique (équilibre d'ouverture du cycle saccharidique), et la fonction amine primaire à l'extrémité du bras aminé en 5'de l'ODN:
Schéma réactionnel de couplage d'ODN sur le PGVE déprotégé :

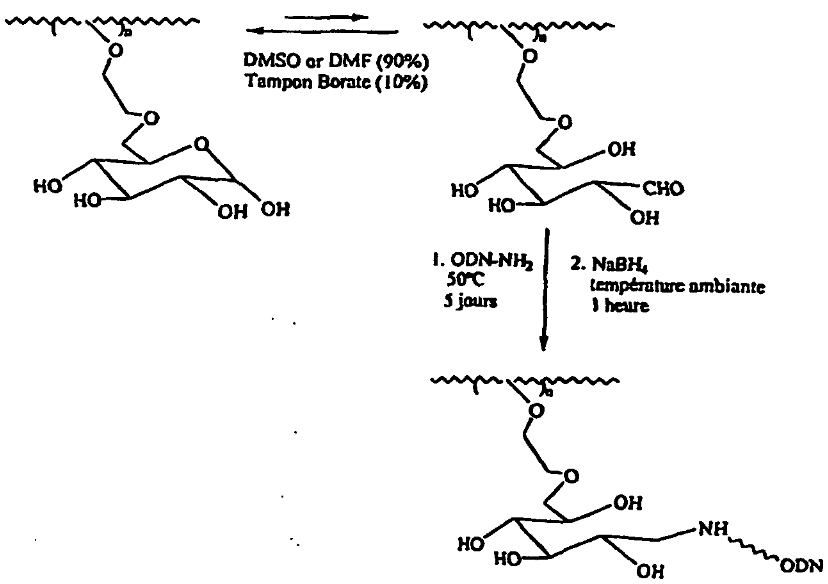


Conditions testées :

- ratio solvant organique/tampon aqueux : 90/10,
- Tampon borate de sodium pH = 9,3 : 100 $mmol.L^{-1}$, 50 $mmol.L^{-1}$ ou 25 $mmol.L^{-1}$,
- Solvant organique : DMF ou DMSO,
- Température : 50°C
- 1 ODN pour 3 motifs saccharidiques, soit un maximum théorique de 6 ODN/greffon, sachant que les greffons polyGVE utilisés ont un degré de polymérisation de 18.

Mode opératoire :

Pour chaque échantillon, 5 nmoles d'ODN dans 20 μL de tampon aqueux sont introduits dans 180 μL d'une solution organique de polyGVE (FD 33) déprotégé (15 nmoles de motifs saccharidiques). Le mélange est laissé sous agitation à 50°C pendant cinq jours. La réduction des fonctions imines formées s'effectue par ajout de $NaBH_4$ (trois fois 100 équivalents, à 1h d'intervalle, à température ambiante).

Les échantillons sont alors séchés au speed-vac puis repris dans 200 μL d'eau distillée juste avant analyse par C.E.S. (colonne UH500, éluant tampon phosphate pH = 6,8 à 0,1 $mol.L^{-1}$).

Tableau récapitulatif des essais de couplage d'ODN sur le polvGVE FD33 déprotégé :

| Solvant organique | Tampon borate pH 9.3 | Rendement de couplage | Nombre moyen d'ODN par greffon |
|---|---|---|---|
| DMF | 25 mM | 20 % | 1,2 |
| DMF | 50mM | 20 % | 1,2 |
| DMF | 100 mM | 20 % | 1,2 |
| DMSO | 25 mM | 0 | 0 |
| DMSO | 50 mM | 0 | 0 |
| DMSO | 100mM | 0 | 0 |

**Exemple 11 : fonctionnalisation terminale des greffons saccharidiques polyGVE :**

Fonctionnalisation hydrazine

Afin de fonctionnaliser les polyGVE à terminaison aldéhyde par un groupe hydrazine, le fluorenyl methyl carbazate (Fmoc) est utilisé.

Fonctionnalisation terminale des greffons saccharidiques par une fonction hydrazine :

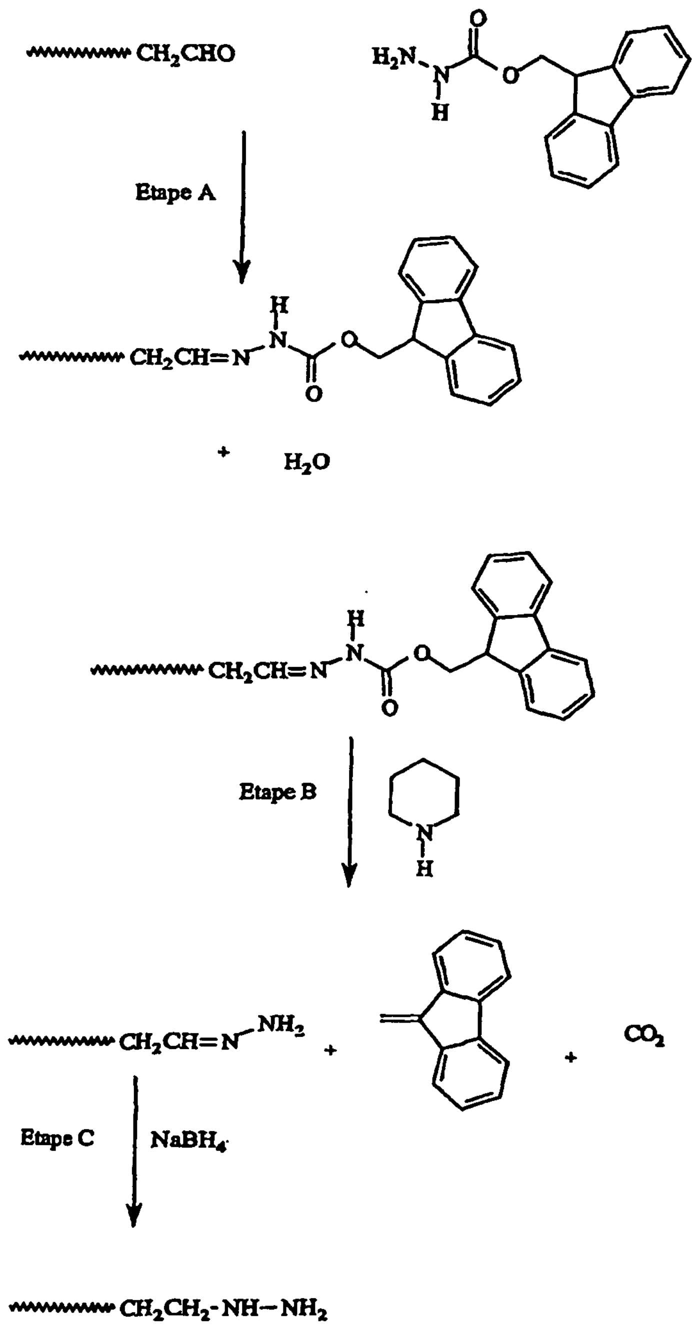


Etape A :

Une solution de polyGVE (1 g) dans le dichlorométhane (vendu par Aldrich qualité HPLC, référence 27,056-3) (4 mL) est placée sous agitation et sous azote à température ambiante. Un équivalent de Fmoc (vendu par Fluka, référence 46917) (0,125 g) en solution dans 2 mL de dichlorométhane est ajouté. Au bout de deux heures, le polymère est précipité dans du pentane.

La suspension trouble est centrifugée jusqu'à obtenir un filtrat limpide. Le culot et le filtrat sont séchés sous vide de la pompe à palettes. Le polymère est analysé par RMN $^1$H et par spectrométrie de masse MALDI-TOF. Ces analyses indiquent une fonctionnalisation quantitative des greffons.

Etape B :

Le polyGVE-Fmoc (0,600 g) est dissous dans 3 mL de dichlorométhane. On ajoute 1 mL d'une solution de pipéridine (vendu par Aldrich, référence 10,409-4) dans le dichlorométhane sec (0,5 mol.L$^{-1}$, 4 équivalents de pipéridine

pour 1 équivalent de polymère).

Le mélange est agité sous azote à température ambiante pendant 1h30. Le polymère est précipité dans du pentane et récupéré par centrifugation. L'analyse RMN $^1H$ confirme la disparition complète du groupement Fmoc.

Etape C :

Afin d'effectuer la réduction de la fonction hydrazone formée en extrémité des greffons, un excès de $NaBH_4$ (0,033 g, vendu par Aldrich, référence 48,088-6) est introduit dans 8 mL d'une solution du polymère précédent dans le dichlorométhane en présence de 1 ml d'éthanol.

Après cinq heures de réaction à température ambiante, le milieu réactionnel est dilué par $CH_2Cl_2$ et l'excès de $NaBH_4$ est hydrolysé par une solution aqueuse saturée en NaCl. Dès l'ajout de cette solution, il se forme une émulsion. Après trente minutes de décantation, deux phases limpides sont obtenues.

La phase organique est lavée trois fois avec de l'eau distillée, séchée sur $MgSO_4$ et concentrée. Le polymère est séché sous vide de la pompe à palettes.

Fonctionnalisation amine :

Afin de fonctionnaliser les polyGVE à terminaison aldéhyde par un groupe amine primaire, l'hexaméthylène diamine (HMDA, vendu par Aldrich, référence H1,169-6) est introduite à l'extrémité des greffons par amination réductrice

Fonctionnalisation terminale des greffons saccharidiques par une fonction amine.

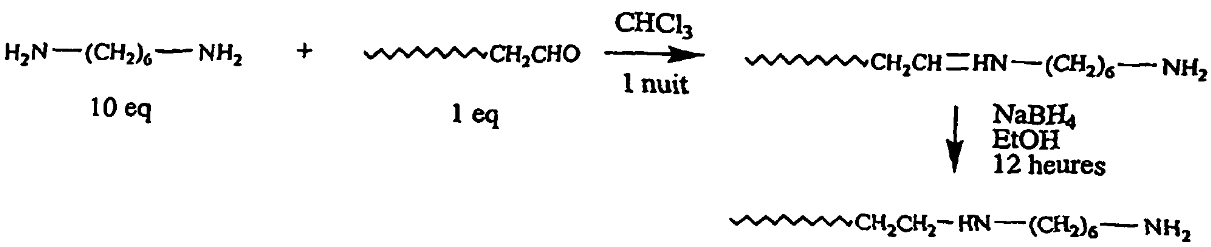


Du polyGVE (0,150 mg) est dissout dans du chloroforme (15 mL) et 0,057 mg de HMDA (10 équivalents) sont ajoutés. Le mélange réactionnel est laissé sous agitation à température ambiante 12 heures.

Afin d'effectuer la réduction des imines formées en amines secondaires, du $NaBH_4$ est introduit (10 équivalents dans 1 mL d'éthanol).

L'excès de $NaBH_4$ est hydrolysé par ajout de 300 mL d'une solution aqueuse saturée en $NH_4Cl$.

La phase organique est extraite par 50 mL de chloroforme, lavée trois fois par 300 mL de la solution aqueuse saturée en $NH_4Cl$, puis une fois par une solution aqueuse saturée en $NaHCO_3$, séchée sur $MgSO_4$ concentrée et séchée sous vide de la pompe à palettes.

Les analyses par RMN $^1H$ et par spectrométrie de masse MALDI-TOF du polymère confirment la structure des greffons fonctionnalisés.

**Exemple 12 : ancrage des greffons saccharidiques sur le squelette**

Une des possibilités pour parvenir à la structure greffée est de faire réagir les greffons fonctionnalisés par une fonction amine (ou hydrazine) sur le squelette copolymère de NAM et de NAS, comme décrit ci dessous :

Réaction du greffon-NH2 (ou du greffon-NH-$NH_2$) sur les fonctions esters activés du squelette NAM/NAS :

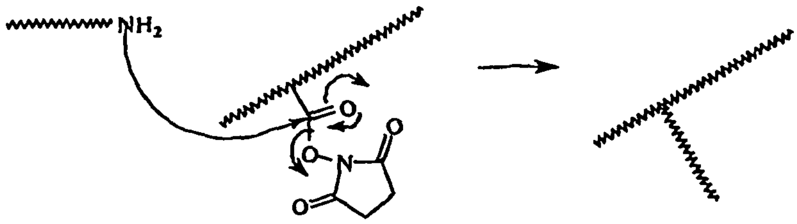

Le greffon-$NH_2$ (120 mg, $2.10^{-5}$ moles) et le squelette (copolymère de NAM et de NAS de 120 000 g/mol, de rapport molaire NAM/NAS égal à 60/40, 23 mg, $6.10^{-5}$ moles de motifs NAS) sont dissous sous azote dans 2 mL de DMF en présence de triéthylamine (3 mg, $3.10^{-5}$ moles).
Le mélange est placé sous agitation (thermomixer) à 40°C. Après cinq jours, le solvant est éliminé par évaporation sous vide. Le résidu est analysé par C.E.S. (éluant DMF, étalonnage polystyrène).
Le rendement de greffage est calculé en comparant l'aire du pic correspondant aux greffons résiduels avec l'aire du pic correspondant aux greffons introduits en utilisant du toluène comme référence interne.
Dans ces conditions, un rendement de greffage de l'ordre de 90% est obtenu, soit une moyenne de 72 greffons (segments latéraux) par chaîne squelette.

**Revendications**

1. Polymère biocompatible d'une masse molaire supérieure à 50.000 g/mole, préférentiellement 90.000 g/mole permettant la fixation de ligands biologiques comprenant au moins un premier segment linéaire ayant une masse molaire comprise entre 10.000 et 250.000 g/mole consistant en un homopolymère hydrophobe résultant de la polymérisation d'un monomère A hydrophobe ; un deuxième segment linéaire ayant une masse molaire supérieure à 40.000 g/mole et de préférence supérieure à 80.000 g/mol consistant en un copolymère hydrophile résultant de la copolymérisation d'un monomère B portant une fonction réactive X et d'un monomère C hydrophile et ne portant pas de fonction réactive, ledit deuxième segment étant lié à une extrémité du premier segment de manière covalente et l'ensemble des deux segments constituant le squelette du polymère.

2. Polymère selon la revendication 1, **caractérisé par le fait que** le monomère A est choisi parmi les dérivés méthacrylates, acrylates, acrylamides, méthacrylamides, styrènique, de préférence le n-butyl acrylate, le tertiobutyl acrylate, le tertiobutyl acrylamide, l'octadécyl acrylamide ou le styrène.

3. Polymère, selon l'une quelconque des revendications 1 à 2, **caractérisé par le fait que** le monomère B est choisi parmi les dérivés fonctionnels d'acrylate, de méthacrylate, d'acrylamide, de méthacrylamide et dérivés fonctionnels styrènique, de préférence le N-acryloxy succinimide, le N-méthacryloxy succinimide, le 2-hydroxyéthyl méthacrylate, le 2-aminoéthyl méthacrylate, le 2-hydroxyéthyl acrylate, le 2-aminoéthyl acrylate ou le 1,2:3,4-di-*O*-isopropylidene-6-*O*-acryloyl-D-galactopyranose.

4. Polymère selon l'une quelconque des revendications 1 à 3, **caractérisé par le fait que** le monomère C est choisi parmi les dérivés d'acrylamide, de méthacrylamide ou la N-vinylpyrrolidone, de préférence la N-vinylpyrrolidone ou la N-acryloyl morpholine.

5. Polymère selon l'une quelconque des revendications 1 à 4, **caractérisé par le fait que** X est choisi parmi les fonctions amine, aldéhyde, acide carboxylique activé sous forme d'ester de N-hydroxysuccinimide.

6. Polymère selon l'une quelconque des revendications 1 à 5, **caractérisé par le fait que** le deuxième segment est un copolymère statistique dont la composition exprimée par le rapport des quantités de monomère en mole, quantité de monomère C sur quantité de monomère B est comprise entre 1 et 10, préférentiellement entre 1,5 et 4.

7. Polymère selon l'une quelconque des revendications 1 à 6, comportant, en outre, au moins un segment dit latéral consistant en un homopolymère linéaire résultant de la polymérisation d'un monomère D portant une fonction réactive Y. ledit segment latéral étant lié de manière covalente sur le deuxième segment en un seul point de liaison par l'intermédiaire des fonctions réactives X du monomère B.

**8.** Polymère selon la revendication 7, **caractérisé par le fait que** la fonction réactive Y est différente de la fonction réactive X.

**9.** Polymère selon la revendication 7, **caractérisé par le fait que** la fonction réactive Y est identique à la fonction réactive X.

**10.** Polymère selon la revendication 9, **caractérisé par le fait que** les fonctions réactives X et Y sont des fonctions protégées.

**11.** Polymère selon l'une quelconque des revendications 7 à 10, cararctérisé par le fait que le monomère D est choisi parmi les dérivés d'un sucre, avantageusement parmi les dérivés du galactose et de préférence le monomère D est le 1,2:3,4-di-*O*-isopropylidene-6-*O*-(2-vinyloxyethyl)-D-galactopyranose.

**12.** Polymère selon l'une quelconque des revendications 7 à 10, **caractérisé par le fait que** le monomère D est le chloro éthyl vinyl éther.

**13.** polymère selon l'une quelconque des revendication 7 à 12, **caractérisé par le fait que** le segment latéral a une masse molaire supérieure à 1500 g/mole.

**14.** Polymère, selon l'une quelconque des revendications 1 à 13, comprenant en outre un segment dit d'éloignement intercalé de manière covalente entre le premier segment et le deuxième segment consistant en un homopolymère linéaire résultant de la polymérisation d'un monomère E hydrophile, ledit monomère ne portant pas de fonction réactive.

**15.** Polymère selon la revendication 14, **caractérisé par le fait que** le monomère E est choisi parmi les dérivés d'acrylamide, les dérivés de méthacrylamide, la N-vinylpyrrolidone, la N-acryloyl morpholine.

**16.** Polymère, selon l'une quelconque des revendications 14 ou 15, **caractérisé par le fait que** le monomère B est identique au monomère C.

**17.** Conjugué polymère-ligand biologique comprenant au moins un ligand biologique fixé sur un polymère tel que défini dans l'une quelconque des revendications-1 à 16.

**18.** Conjugué polymère-ligand biologique, selon la revendication 17, **caractérisé par le fait que** la fixation du ligand biologique sur le polymère est réalisée directement par couplage covalent.

**19.** Conjugué polymère-ligand biologique, selon la revendication 17, **caractérisé par le fait que** la fixation du ligand biologique sur le polymère est réalisée indirectement par une interaction non covalente.

**20.** Dispositif de capture d'une molécule cible dans le but de la détecter et/ou la doser et/ou la purifier comprenant un support solide sur lequel est immobilisé un conjugue polymère-ligand biologique tel que défini dans l'une quelconque des revendications 17 à 19.

**21.** Dispositif selon la revendication 20, **caractérisé par le fait que** le conjugué polymère-ligand biologique est immobilisé sur le support solide par adsorption.

**22.** Dispositif selon la revendication 20, **caractérisé par le fait que** le conjugué polymère-ligand biologique est immobilisé sur la support solide par liaison covalente.

**23.** Dispositif selon l'une quelconque des revendications 20 à 22, **caractérisé par le fait que** le ligand biologique est capable de former un complexe de capture ligand/anti-ligand.

**24.** Dispositif selon la revendication 23, caracténse par le fait que ledit anti-ligand constitue la molécule cible.

**25.** Procédé de synthèse d'un polymère selon l'une quelconque des revendications 1 à 16 **caractérisé par le fait que** l'on prépare le squelette linéaire du polymère par accroissement de chaînes par la technique de transfert réversible de chaînes par addition/fragmentation (RAFT) en présence d'un agent de transfert de type dithioester.

**26.** Procédé de synthèse d'un polymère selon l'une quelconque des revendications 7 à 16, comprenant les étapes suivantes :

- l'on prépare le squelette linéaire du polymère par la technique de polymérisation par transfert réversible de chaînes par addition/fragmentation (RAFT) en présence d'un agent de transfert de type dithiocster,
- l'on prépare indépendamment le segment latéral par une technique de polymérisation contrôlée choisie parmi le groupe comprenant la polymérisation cationique vivante, la polymérisation anionique vivante, la polymérisation par transfert inversible de chaînes par addition/fragmentation (RAFT), puis l'on introduit sur ledit segment latéral. à une extrémité, une fonction réactive capable de réagir avec la fonction réactive X du monomère B présent sur le squelette,
- l'on met en présence le squelette linéaire et le segment latéral pour permettre le couplage.

## Claims

**1.** Biocompatible polymer with a molar mass of greater than 50,000 g/mol, preferably 90,000 g/mol, allowing the fixing of biological ligands, and comprising at least: a first linear segment having a molar mass of between 10,000 and 250,000 g/mol consisting of a hydrophobic homopolymer resulting from the polymerization of a hydrophobic monomer A; a second linear segment having a molar mass of greater than 40,000 g/mol and preferably greater than 80,000 g/mol consisting of a hydrophilic copolymer resulting from the copolymerization of a monomer B bearing a reactive function X and of a hydrophilic monomer C not bearing a reactive function, said second segment being covalently bonded to one end of the first segment and the two segments together constituting the skeleton of the polymer.

**2.** Polymer according to Claim 1, **characterized in that** the monomer A is chosen from methacrylate, acrylate, acrylamide, methacrylamide and styrene derivatives, preferably n-butyl acrylate, tert-butyl acrylate, tert-butylacrylamide, octadecylacrylamide or styrene.

**3.** Polymer according to either of Claims 1 and 2, **characterized in that** the monomer B is chosen from acrylate, methacrylate, acrylamide and methacrylamide functional derivatives and styrene functional derivatives, preferably N-acryloxysuccinimide, N-methacryloxysuccinimide, 2-hydroxyethyl methacrylate, 2-aminoethyl methacrylate, 2-hydroxyethyl acrylate, 2-aminoethyl acrylate or 1,2:3,4-di-O-isopropylidene-6-O-acryloyl-D-galactopyranose.

**4.** Polymer according to any one of Claims 1 to 3, **characterized in that** the monomer C is chosen from acrylamide, methacrylamide and N-vinylpyrrolidone derivatives, preferably N-vinylpyrrolidone or N-acryloylmorpholine.

**5.** Polymer according to any one of Claims 1 to 4, **characterized in that** X is chosen from amine and aldehyde functions and carboxylic acid functions activated in the form of N-hydroxysuccinimide ester.

**6.** Polymer according to any one of Claims 1 to 5, **characterized in that** the second segment is a random copolymer whose composition, expressed by the ratio of the amounts of monomers in moles: amount of monomer C to amount of monomer B, is between 1 and 10 and preferably between 1.5 and 4.

**7.** Polymer according to any one of Claims 1 to 6, also comprising at least one "side" segment consisting of a linear homopolymer resulting from the polymerization of a monomer D bearing a reactive function Y, said side segment being covalently bonded to the second segment at a single bonding point via reactive functions X of the monomer B.

**8.** polymer according to Claim 7, **characterized in that** the reactive function Y is different than the reactive function X.

**9.** Polymer according to Claim 7, **characterized in that** the reactive function Y is identical to the reactive function X.

**10.** Polymer according to Claim 9, **characterized in that** the reactive functions X and Y are protected functions.

**11.** Polymer according to any one of Claims 7 to 10, **characterized in that** the monomer D is chosen from sugar derivatives, advantageously from galactose derivatives, and the monomer D is preferably 1,2:3,4-di-O-isopropylidene-6-O-(2-vinyloxyethyl)-D-galactopyranose.

**12.** Polymer according to any one of Claims 7 to 10, **characterized in that** the monomer D is chloroethyl vinyl ether.

**13.** Polymer according to any one of Claims 7 to 12, **characterized in that** the side segment has a molar mass of greater than 1500 g/mol.

**14.** Polymer according to any one of Claims 1 to 13, also comprising a "spacer" segment covalently intercalated between the first segment and the second segment, consisting of a linear homopolymer resulting from the polymerization of a hydrophilic monomer E, said monomer not bearing any reactive functions.

**15.** Polymer according to Claim 14, **characterized in that** the monomer E is chosen from acrylamide derivatives, methacrylamide derivatives, N-vinylpyrrolidone and N-acryloylmorpholine.

**16.** Polymer according to either of Claims 14 and 15, **characterized in that** the monomer E is identical to the monomer C.

**17.** Polymer-biological ligand conjugate comprising at least one biological ligand fixed to a polymer as defined in any one of Claims 1 to 16.

**18.** Polymer-biological ligand conjugate according to Claim 17, **characterized in that** the biological ligand is fixed to the polymer directly by covalent coupling.

**19.** Polymer-biological ligand conjugate according to Claim 17, **characterized in that** the biological ligand is fixed to the polymer indirectly by a noncovalent interaction.

**20.** Device for capturing a target molecule with the aim of detecting it and/or assaying it and/or purifying it, comprising a solid support on which is immobilized a polymer-biological ligand conjugate as defined in any one of Claims 17 to 19.

**21.** Device according to Claim 20, **characterized in that** the polymer-biological ligand conjugate is immobilized on the solid support by adsorption.

**22.** Device according to Claim 20, **characterized in that** the polymer-biological ligand conjugate is immobilized on the solid support by covalent bonding.

**23.** Device according to any one of Claims 20 to 22, **characterized in that** the biological ligand is capable of forming a ligand/antiligand capture complex.

**24.** Device according to Claim 23, **characterized in that** said antiligand constitutes the target molecule.

**25.** Process for synthesizing a polymer according to any one of Claims 1 to 16, **characterized in that** the linear skeleton of the polymer is prepared by growing chains by the reversible addition/fragmentation chain-transfer (RAFT) technique in the presence of a transfer agent cf dithioester type.

**26.** Process for synthesizing a polymer according to any one of Claims 7 to 16, comprising the following steps:

- the linear skeleton of the polymer is prepared by the reversible addition/fragmentation chain-transfer (RAFT) technique in the presence of a transfer agent of dithioester type,
- the side segment is prepared independently by means of a controlled polymerization technique chosen from the techniques comprising living cationic polymerization, living anionic polymerization and reversible addition/ fragmentation chain-transfer (RAFT) polymerization, and a reactive function capable of reacting with the reactive function X of the monomer B present on the skeleton is then introduced onto said side segment, at one end,
- the linear skeleton and the side segment are placed in contact to allow the coupling.

## Patentansprüche

**1.** Biokompatibles Polymer mit einer Molmasse von oberhalb 50.000 g/mol, vorzugsweise 90.000 g/mol, mit dem biologische Liganden fixiert werden können und das mindestens einen ersten geradkettigen Abschnitt mit einer Molmasse zwischen 10.000 und 250.000 g/mol, der aus einem durch Polymerisation eines hydrophoben Monomers A entstandenen hydrophoben Homopolymer besteht; einen zweiten geradkettigen Abschnitt mit einer Molmasse von oberhalb 40.000 g/mol, vorzugsweise oberhalb 80.000 g/mol, der aus einem durch Copolymerisation eines Monomers B mit einer reaktionsfähigen Funktion X und eines hydrophilen Monomers C ohne reaktionsfähige Funktion entstandenen hydrophilen Copolymer besteht, wobei der zweite Abschnitt kovalent an ein Ende des ersten Abschnitts gebunden ist und die Gesamtheit der beiden Abschnitte das Polymerskelett bildet, aufweist.

2. Polymer nach Anspruch 1, **dadurch gekennzeichnet, daß** das Monomer A aus der Reihe der Methacrylat-, Acrylat-, Acrylamid-, Methacrylamid-, Styrolderivate, vorzugsweise n-Butylacrylat, tert.-Butylacrylat, tert.-Butylacrylamid, Octadecylacrylamid oder Styrol, stammt.

3. Polymer nach Anspruch 1 oder 2, **dadurch gekennzeichnet, daß** das Monomer B aus der Reihe der funktionalisierten Acrylat-, Methacrylat-, Acrylamid-, Methacrylamidderitrate und der funktionalisierten Styrolderivate, vorzugsweise N-Acryloxysuccinimid, N-Methacryloxysuccinimid, 2-Hydroxyethylmethacrylat, 2-AminoethylmeLhacrylat, 2-Hydroxyethylacrylat, 2-Aminoethylacrylat oder 1,2:3,4-Di-*O*-isopropyliden-6-*O*-acryloyl-*D*-galactopyranose, stammt.

4. Polymer nach einem der Ansprüche 1 bis 3, **dadurch gekennzeichnet, daß** das Monomer C aus dcr Reihe der Acrylamidderivate, Methacrylamidderivate oder N-Vinylpyrrolidon, vorzugsweise N-Vinylpyrrolidon oder N-Acryloylmorpholin, stammt.

5. Polymer nach einem der Ansprüche 1 bis 4, **dadurch gekennzeichnet, daß** X aus der Reihe der Aminofunktionen, Aldehydfunktionen und Karbonsäureaktivesterfunktionen in Form des N-Hydroxysuccinimidesters stammt.

6. Polymer nach einem der Ansprüche 1 bis 5, **dadurch gekennzeichnet, daß** es sich bei dem zweiten Abschnitt um ein statistisches Copolymer handelt, dessen Zusammensetzung, ausgedrückt durch das Verhältnis der Monomermengen in Mol, Monomermenge C zu Monomermenge B zwischen 1 und 10, vorzugsweise zwischen 1,5 und 4 beträgt.

7. Polymer nach einem der Ansprüche 1 bis 6, das weiterhin mindestens einen sogenannten Seitenabschnitt umfaßt, der aus einem durch Polymerisation eines Monomers D, das eine reaktionsfähige Funktion Y aufweist, entstandenen geradkettigen Homopolymer besteht, wobei der Seitenabschnitt kovalent mittels der reaktionsfähigen Funktionen X des Monomers B an den zweiten Abschnitt an einer einzigen Bindungsstelle gebunden ist.

8. Polymer nach Anspruch 7, **dadurch gekennzeichnet, daß** sich die reaktionsfähige Funktion Y von der reaktionsfähigen Funktion X unterscheidet.

9. Polymer nach Anspruch 7, **dadurch gekennzeichnet, daß** die reaktionsfähige Funktion Y mit der reaktionsfähigen Funktion X identisch ist.

10. Polymer nach Anspruch 9, **dadurch gekennzeichnet, daß** es sich bei den reaktionsfähigen Funktionen X und Y um geschützte Funktionen handelt.

11. Polymer nach einem der Ansprüche 7 bis 10, **dadurch gekennzeichnet, daß** das Monomer D aus der Gruppe der Zuckerderivate, vorteilhafterweise aus der Gruppe der Galactosederivate stammt und es sich bei dem Monomer D vorzugsweise um 1,2:3,4-Di-*O*-isopropyliden-6-*O*-(2-vinyloxyethyl)-*D*-galactopyranose handelt.

12. Polymer nach einem der Ansprüche 7 bis 10, **dadurch gekennzeichnet, daß** es sich bei dem Monomer D um Chlorechylvinylether handelt.

13. Polymer nach einem der Ansprüche 7 bis 12, **dadurch gekennzeichnet, daß** der Seitenabschnitt eine Molmasse von oberhalb 1500 g/mol aufweist.

14. Polymer nach einem der Ansprüche 1 bis 13, das weiterhin einen sogenannten Spacer-Abschnitt umfaßt, der kovalent zwischen den ersten Abschnitt und den zweiten Abschnitt zwischengeschaltet ist und aus einem durch Polymerisation eines hydrophilen Monomers E, das keine reaktionsfähige Funktion aufweist, entstandenen geradkettigen Homopolymer besteht.

15. Polymer nach Anspruch 14, **dadurch gekennzeichnet, daß** das Monomer E aus der Gruppe der Acrylamidderivate, der Methacrylamidderivate, N-Vinylpyrrolidon und N-Acryloylmorpholin stammt.

16. Polymer nach Anspruch 14 oder 15, **dadurch gekennzeichnet, daß** das Monomer E mit dem Monomer C identisch

ist.

**17.** Polymer-Bioligand-Konjugat, das mindestens einen biologischen Liganden, der an ein wie in einem der Ansprüche 1 bis 16 definiertes Polymer gebunden ist, umfaßt.

**18.** Polymer-Bioligand-Konjugat nach Anspruch 17, **dadurch gekennzeichnet, daß** die Bindung des biologischen Liganden an das Polymer direkt durch kovalente Bindung erfolgt.

**19.** Polymer-Bioligand-Konjugat nach Anspruch 17, **dadurch gekennzeichnet, daß** die Bindung des biologischen Liganden an das Polymer indirekt durch nichtkovalente Wechselwirkung erfolgt.

**20.** Einrichtung zum Einfangen eines Zielmoleküls mit dem Zweck, dieses nachzuweisen und/oder dieses mittels Assay zu bestimmen und/oder dieses auf zureinigen, wobei die Einrichtung einen festen Träger umfaßt, auf dem ein wie in einem der Ansprüche 17 bis 19 definiertes Polymer-Bioligand-Konjugat immobilisiert ist.

**21.** Einrichtung nach Anspruch 20, **dadurch gekennzeichnet, daß** das Polymer-Bioligand-Konjugat auf dem festen Träger mittels Adsorption immobilisiert ist.

**22.** Einrichtung nach Anspruch 20, **dadurch gekennzeichnet, daß** das Polymer-Bioligand-Konjugat auf dem festen Träger mittels kovalenter Bindung immobilisiert ist.

**23.** Einrichtung nach einem der Ansprüche 20 bis 22, **dadurch gekennzeichnet, daß** der biologische Ligand zur Bildung eines Ligand/Antiligand-Fangkomplexes fähig ist.

**24.** Einrichtung nach Anspruch 23, **dadurch gekennzeichnet, daß** dieser Antiligand das Zielmolekül darstellt.

**25.** Verfahren zur Herstellung eines Polymers nach einem der Ansprüche 1 bis 16, **dadurch gekennzeichnet, daß** man das geradkettige Grundgerüst des Polymers durch Verlängerung von Ketten mittels der RAFT-Technik (reversible addition/fragmentation chain transfer) in Gegenwart eines Transfer-Mittels des Dithioestertyps herstellt.

**26.** Verfahren zur Herstellung eines Polymers nach einem der Ansprüche 7 bis 16, das die folgenden Schritte umfaßt:

- das geradkettige Grundgerüst des Polymers wird mittels RAFT-Technik (reversible addition/fragmentation chain transfer) in Gegenwart eines Transfer-Mittels des Dithioestertyps hergestellt,
- der Seitenabschnitt wird unabhängig mittels einer kontrollierten Polymerisationstechnik aus der Reihe der Techniken lebende kationische Polymerisation, lebende anionische Polymerisation, RAFT-Technik (reversible addition/fragmentation chain transfer) hergestellt, anschließend wird auf diesem Seitenabschnitt an einem Ende eine reaktionsfähige Funktion, die mit der auf dem Grundgerüst vorliegenden reaktionsfähigen Funktion X des Monomers B zu reagieren vermag, eingeführt,
- das geradkettige Grundgerüst und der Seitenabschnitt werden miteinander in Kontakt gebracht, um die Kopplung zu ermöglichen.

Figure 1

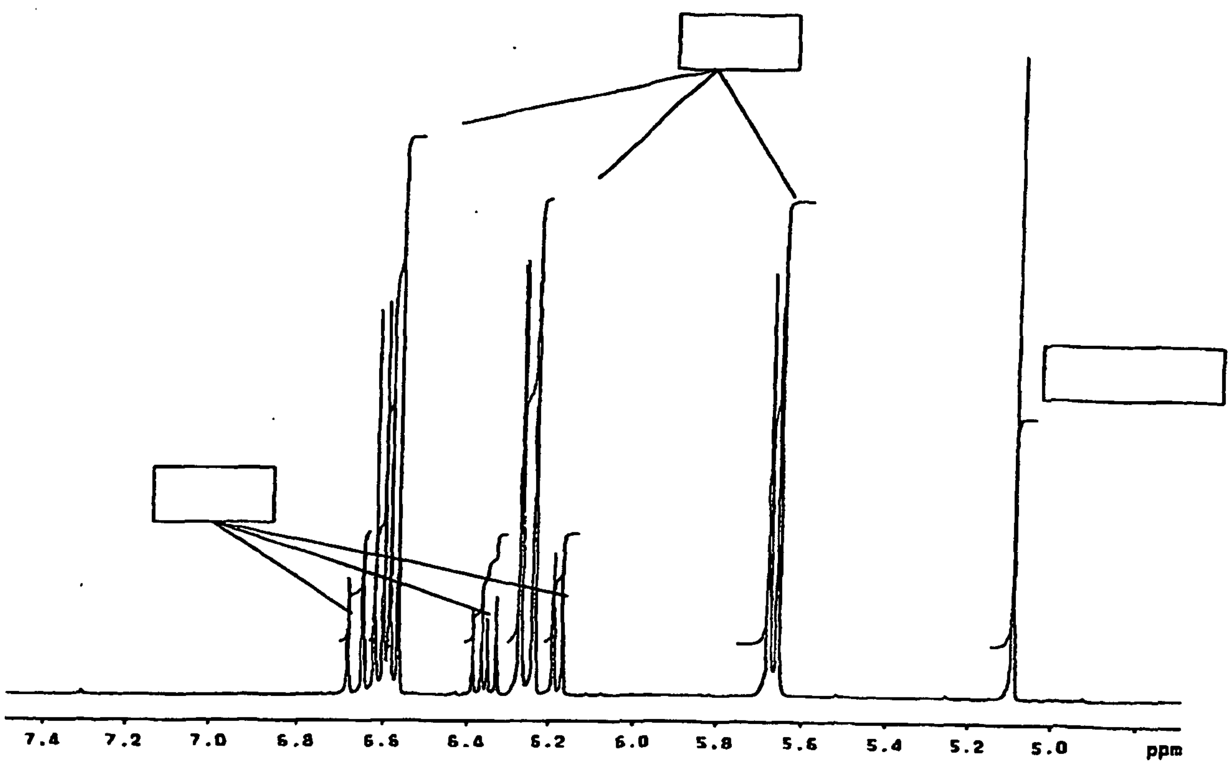

Figure 2

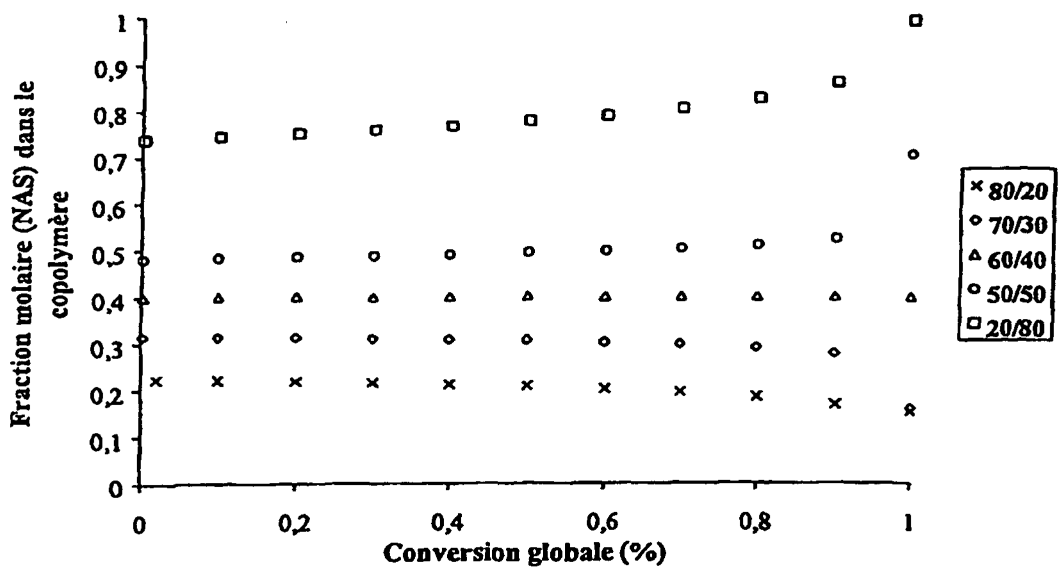

Fraction molaire (NAS) dans le copolymère
1
0,9
0,8
0,7
0,6
0,5
0,4
0,3
0,2
0,1
0
0
0,2
0,4
0,6
0,8
1
Conversion globale (%)
80/20
70/30
60/40
50/50
20/80

Figure 3

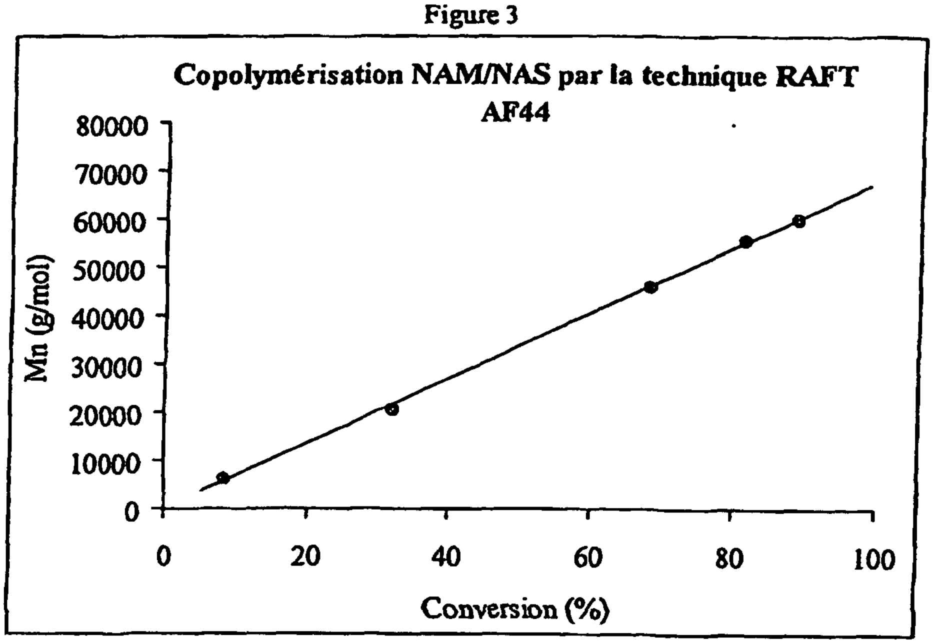
Copolymérisation NAM/NAS par la technique RAFT
AF44
80000
70000
60000
50000
40000
30000
20000
10000
0
Mn (g/mol)
0
20
40
60
80
100
Conversion (%)